# FASCICULE DE BREVET EUROPEEN

(11) **EP 1 371 252 B1**
(45) Date de publication et mention de la délivrance du brevet: **13.05.2009**
(21) Numéro de dépôt: 02722373.4
(22) Date de dépôt: 22.03.2002
(51) Int. Cl.: H04W 88/02

(54) **MODULE DE RADIOCOMMUNICATION EXECUTANT UN LOGICIEL PRINCIPAL ET UN LOGICIEL CLIENT COMPRENANT PLUSIEURS APPLICATIONS CLIENTES**
"FUNKKOMMUNIKATIONSMODUL, DAS EINE HAUPTSOFTWARE UND EINE CLIENTSOFTWARE AUSFÜHRT, MIT MEHREREN CLIENT-ANWENDUNGEN"
RADIOCOMMUNICATION MODULE EXECUTING A MAIN SOFTWARE AND A CLIENT SOFTWARE COMPRISING SEVERAL CLIENT APPLICATIONS

(30) Priorité: 22.03.2001 FR 0103909; 02.10.2001 FR 0112693
(43) Date de publication de la demande: 17.12.2003
(73) Titulaire: Wavecom SA, 92442 Issy-les-Moulineaux Cedex (FR)
(72) Inventeur: MONTES, Jacques, F-94130 NOGENT SUR MARNE (FR)
(74) Mandataire: Vidon, Patrice
(86) Numéro de dépôt international: PCT/FR2002/001028
(87) Numéro de publication internationale: WO 2002/078376

(56) Documents cités:
- WO-A-00/33538
- WO-A-99/63767
- FR-A- 2 775 550

## Description

Le domaine de l'invention est celui des systèmes de radiocommunication notamment, mais non exclusivement, selon le standard GSM (pour "Global System for Mobile communications" en anglais), DCS 1800 (pour "Digital Cellular System 1800 MHz" en anglais), PCS 1900 (pour "Personal Communication System" en anglais), GPRS (pour "General Packet Radio service"), ou encore UMTS (pour "Universal Mobile Telecommunication System" en anglais).

Plus précisément, l'invention concerne un module de radiocommunication. On rappelle que le module de radiocommunication est un élément essentiel d'un radiotéléphone. Il héberge et exécute un logiciel principal (communément appelé "logiciel de radiocommunication" ou "logiciel GSM") qui assure notamment des fonctions de communication sans fil (radiocommunication) et pilote divers éléments matériels (écran, clavier, haut-parleur, ...) du radiotéléphone.

Habituellement (première application), le module de radiocommunication est compris dans un terminal (ou ME, pour "Mobile Equipment" en anglais) qui coopère avec une carte SIM (pour "Subscriber Identity Module" en anglais, ou module d'identification d'abonné) comme illustré par les demandes de brevet française FR 2 775 550 (société SCHLUMBERGER) et internationale WO 9936767 (société TELIA).

D'autres applications ont d'ores et déjà été envisagées pour le module de radiocommunication précité.

Il a notamment été proposé (seconde application) d'intégrer le module de radiocommunication dans des dispositifs autres que des terminaux de radiocommunication, mais nécessitant néanmoins une fonctionnalité de communication sans fil. A titre d'exemple, on peut citer des dispositifs de télémétrie (relevés de compteur), des dispositifs d'alarme ou encore des dispositifs lecteur de cartes bancaires.

Il a également été proposé (troisième application) de fournir le module de radiocommunication sous forme indépendante : il est alors qualifié de modem. Un tel modem ne comprend aucun élément matériel (écran, clavier, haut-parleur, ...) d'interface homme/machine. Il est destiné à coopérer avec un équipement tiers (supportant un logiciel client), qui lui possède des éléments matériels d'interface homme/machine. L'équipement tiers peut notamment, mais non exclusivement, être un micro-ordinateur. D'une façon générale, l'équipement tiers héberge et exécute un logiciel client de pilotage, permettant de piloter (c'est-à-dire de commander) le module de radiocommunication, grâce à un jeu de commandes de pilotage au format AT. Les commandes AT (pour "ATtention command" en anglais) permettent à l'équipement tiers (ou TE pour "Terminal Equipment") d'exiger du terminal de radiocommunication auquel il est relié d'exécuter certaines actions prédéterminées. A cet effet, le logiciel principal (hébergé par le module de radiocommunication) comprend des moyens d'exécution des commandes AT, qui lui sont envoyées par le logiciel client de pilotage (hébergé par l'équipement tiers).

Pour plus de précisions concernant les commandes AT, on pourra se reporter d'une part aux normes "GSM 07.05" et "GSM 07.07" de l'ETSI et d'autre part à la recommandation V25ter de l'ITU-T, qui sont insérées ici par référence.

D'une façon générale, le pilotage du module de radiocommunication par un équipement tiers, grâce aux commandes AT, ne s'applique pas uniquement dans le cadre de la troisième application précitée (module de radiocommunication formant modem), mais aussi dans le cadre des première et seconde application précitées (module de radiocommunication compris dans un terminal de radiocommunication ou un autre dispositif).

En d'autres termes, quelle que soit l'application envisagée, le module de radiocommunication peut être piloté par un équipement tiers avec lequel il coopère (généralement via une liaison série). Dans ce cas, un logiciel client de pilotage (comprenant une "application cliente externe"), hébergé et exécuté par l'équipement tiers, envoie des commandes AT à un logiciel principal, hébergé et exécuté par le module de radiocommunication, en vue de leur exécution par ce dernier.

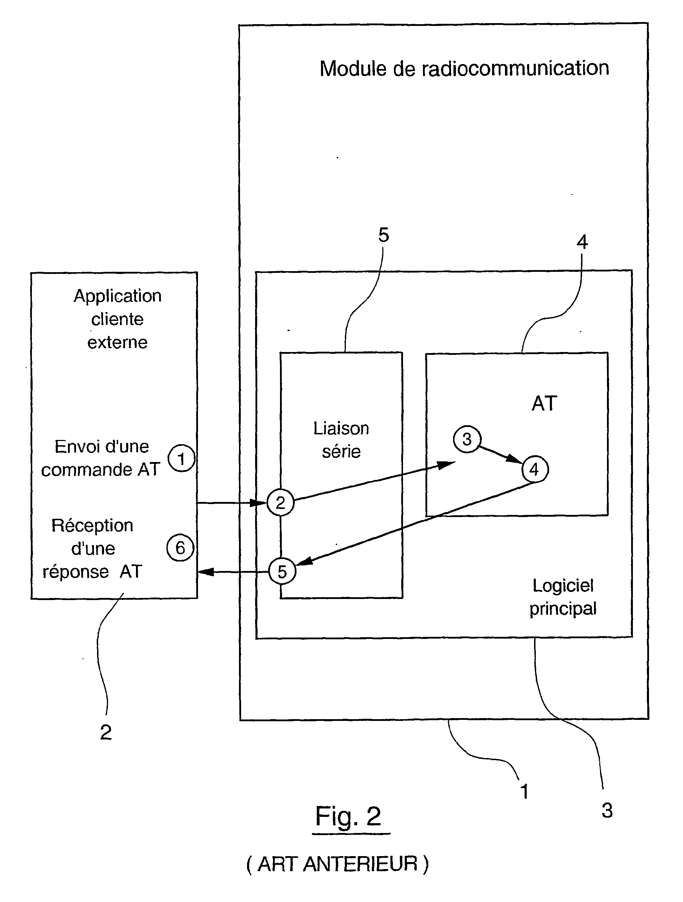

Comme illustré sur la **figure 2**, le fonctionnement de la technique actuelle de pilotage d'un module de radiocommunication par un équipement tiers peut être résumé ainsi :
- étape "1" : l'application cliente externe (logiciel client de pilotage) 2 envoie une commande AT ;
- étape "2" : la liaison série 5 transmet la commande AT aux moyens 4 d'exécution des commandes AT compris dans le logiciel principal 3 hébergé et exécuté par le module de radiocommunication 1 ;
- étape "3" : les moyens 4 d'exécution exécutent la commande AT ;
- étape "4" : après exécution, les moyens d'exécution 4 envoient une réponse AT à l'application cliente externe 2 ;
- étape "5" : cette réponse est envoyée à travers la liaison série 5 ;
- étape "6" : l'application cliente externe 2 reçoit la réponse.

Chacune de ces étapes est illustrée sur la figure 2 par un cercle dans lequel est inscrit le numéro de l'étape concernée. La même convention est adoptée dans les figures suivantes relatives à la présente invention (et qui sont décrites en détail dans la suite de la description).

La technique actuelle de pilotage d'un module de radiocommunication par un équipement tiers présente plusieurs inconvénients.

Tout d'abord, elle nécessite un double jeu de ressources (processeur et mémoire). En effet, le module de radiocommunication comprend un processeur et une mémoire (premier jeu de ressources) et l'équipement tiers dispose également d'un processeur et d'une mémoire (second jeu de ressources). La technique actuelle précitée est donc coûteuse en terme de matériel et de consommation énergétique.

Un autre inconvénient de la technique actuelle précitée est que le module de radiocommunication subit entièrement le pilotage effectué par l'équipement tiers. En effet, le logiciel client de pilotage, hébergé et exécuté par l'équipement tiers, est le "maître", tandis que le logiciel principal, hébergé et exécuté par le module de radiocommunication, est l'"esclave".

Afin de pallier ces inconvénients de l'état de la technique, la demanderesse (société Wavecom) a déposé le 22 mars 2001 une demande de brevet française n° FR 2 822 627 ayant pour titre " Module de radiocommunication hébergeant et exécutant un logiciel client, et procédé correspondant de mise en oeuvre d'un logiciel client de pilotage". Dans cette demande FR 2 822 627, il est proposé une nouvelle technique de pilotage d'un module de radiocommunication consistant à héberger sur le module de radiocommunication au moins un logiciel client pouvant jouer le rôle d'un logiciel client de pilotage et/ou le rôle d'un logiciel client de supervision.

Ainsi, dans le cas où le logiciel client embarqué joue le rôle d'un logiciel client de pilotage, le module de radiocommunication présente un fonctionnement autonome et peu coûteux. En effet, dans ce cas, le module de radiocommunication n'a pas à coopérer avec un équipement tiers, et le logiciel principal et le logiciel client de pilotage utilisent les mêmes ressources (même processeur et même mémoire).

Par ailleurs, dans le cas où le logiciel client embarqué joue le rôle d'un logiciel client de supervision, le module de radiocommunication n'est pas limité à un rôle d'esclave vis-à-vis de l'équipement tiers qui exécute le logiciel client de pilotage. En effet, le logiciel client de supervision, exécuté par le module de radiocommunication, gère le pilotage demandé par le logiciel client de pilotage, exécuté par l'équipement tiers. On notera que, dans ce cas, le logiciel client embarqué est un logiciel supplémentaire par rapport à la configuration de l'état de la technique précité. Toutefois, ce logiciel supplémentaire est peu coûteux puisqu'il utilise les mêmes ressources (processeur et mémoire) que le logiciel principal également hébergé par le module de radiocommunication.

Dans un mode de réalisation préférentiel de la nouvelle technique précitée :
- le logiciel principal comprend notamment un fichier binaire contenant l'application principale ;
- le logiciel client comprend notamment un premier fichier binaire contenant l'application cliente, et un second fichier binaire (par exemple sous la forme d'une librairie déjà compilée) contenant une application d'interface entre des fonctions sources, associées à l'application cliente, et des fonctions d'exécution, associées à l'application principale.

Cette nouvelle technique de pilotage d'un module de radiocommunication peut être vue comme une plate-forme logicielle, permettant aux clients de développer leurs propres applications clientes et de les télécharger dans les modules de radiocommunication.

En effet, dans le mode de réalisation préférentiel précité, le logiciel principal et l'application d'interface sont des fichiers binaires "propriétaire", développés par le fabriquant du module de radiocommunication, tandis que l'application cliente est un fichier binaire "client", développé par le client.

On rappelle que le processus de développement d'un fichier binaire comprend les étapes suivantes :
- écriture de fichiers sources, par exemple en langage "C" ;
- compilation de ces fichiers sources, de façon à générer des fichiers objets (en langage machine pour le microprocesseur se trouvant sur le module de radiocommunication) ;
- édition de lien des fichiers objets (fichiers sources compilés), de façon à générer un fichier binaire (qui est ensuite téléchargé dans le module de radiocommunication).

Dans le contexte de la nouvelle technique précitée de pilotage d'un module de radiocommunication, la présente invention a pour objectif de faciliter la tâche du client dans le processus de développement d'une application cliente.

L'invention a également pour objectif de proposer une solution simple et efficace aux problèmes de dialogue entre applications (cliente principale et secondaire) qui résultent de la mise en oeuvre du concept général de la présente invention.

On rappelle maintenant brièvement deux techniques connues pour résoudre les problèmes de dialogue entre deux applications, avec leurs inconvénients respectifs.

Selon une première technique connue, les problèmes de dialogue entre deux applications logicielles sont résolus lors de l'édition de lien. Mais cela impose de connaître l'ensemble des points de dialogues. En outre, l'échange entre deux applications de l'ensemble de leur fonctions sources de dialogue, impose à chaque application de s'adapter à l'autre. Ceci revient à dire que le développeur d'une application (secondaire) devra écrire autant de versions de celle-ci que de clients voulant l'intégrer dans leurs applications (principales).

Une seconde technique connue pour résoudre les problèmes de dialogue entre deux applications consiste à mettre en oeuvre des mécanismes tels que l'édition de lien dynamique. Un tel mécanisme permet de ne charger en mémoire que les fonction réellement utilisées. Cette technique est par exemple celle des DLL (pour "Dynamic Link Library") de Windows (marque déposée). Malheureusement elle est gourmande en mémoire et s'applique mal aux contraintes fortes en terme de CPU, de mémoire et de temps réel des modules de radiocommunication.

Ces différents objectifs, ainsi que d'autres qui apparaîtront par la suite, sont atteints selon l'invention à l'aide d'un, module de radiocommunication, du type hébergeant et exécutant un logiciel principal assurant notamment des fonctions de radiocommunication, ledit logiciel principal comprenant des moyens d'exécution de commandes de pilotage, envoyées au logiciel principal par au moins un logiciel client de pilotage et appartenant à un jeu de commandes de pilotage prédéterminé. Selon l'invention, ledit module de radiocommunicadon héberge et exécute en outre au moins un logiciel client, dit logiciel client embarqué, comprenant une application cliente principale et au moins une application cliente secondaire, esclave de l'application cliente principale, les traitements effectués par ledit logiciel client embarqué étant répartis entre ladite application cliente principale et ladite au moins une application cliente secondaire. Le logiciel client embarqué et le logiciel principal comprennent des moyens permettant au logiciel client embarqué de jouer au moins un des deux rôles suivants :
- le rôle d'un logiciel client de pilotage, envoyant des commandes de pilotage au logiciel principal, et recevant du logiciel principal des réponses, résultant de l'exécution de certaines des commandes de pilotage ;
- le rôle d'un logiciel client de supervision, gérant l'exécution de commandes de pilotage envoyées par un logiciel client de pilotage, dit logiciel client externe, hébergé et exécuté par un équipement tiers coopérant avec le module de radiocommunication.

La présente invention se situe donc dans le contexte de la nouvelle technique précitée de pilotage d'un module de radiocommunication, selon laquelle le module de radiocommunication héberge et exécute un logiciel client pouvant jouer le rôle d'un logiciel client de pilotage et/ou le rôle d'un logiciel client de supervision.

Le principe général de l'invention consiste, dans ce contexte, à utiliser non pas une application cliente "monobloc", mais une application cliente "distribuée" ("multiblocs") comprenant une application cliente principale combinée avec une ou plusieurs application(s) cliente(s) secondaire(s). Chaque application cliente secondaire est une application esclave, en terme de lancement et d'arrêt, de l'application cliente principale qui l'appelle. Mais une fois démarrée, l'application cliente secondaire a accès, indépendamment de l'application cliente principale, à l'ensemble des fonctions d'exécution offertes par le logiciel principal (via un mécanisme, détaillé par la suite, d'abonnement à un service d'envoi de messages provenant du logiciel principal).

Les applications clientes secondaires sont des "blocs élémentaires" qui peuvent être fournis aux clients par un développeur tiers (typiquement le fabriquant du module de radiocommunication). Ainsi, le travail de développement du client est réduit puisqu'il ne développe que l'"application cliente principale", qui sous-traite certains traitements en faisant appel à une ou plusieurs application(s) cliente(s) secondaire(s).

On notera que le client peut également développer lui-même des applications clientes secondaires, s'il souhaite pouvoir les appeler dans différentes applications clientes principales qu'il développe.

Dans un premier mode de réalisation préférentiel de l'invention, ledit logiciel client comprend un fichier binaire contenant ladite application cliente principale et ladite au moins une application cliente secondaire.

Dans ce cas, l'application cliente secondaire est préférentiellement fournie sous la forme d'un fichier objet. Ainsi, le fichier source n'est pas communiqué, pour des raisons de préservation du savoir-faire propriétaire (ou "tiers"). Le fichier objet contenant l'application cliente secondaire doit faire l'objet d'une édition de lien avec le ou les fichier(s) objet contenant l'application cliente principale, et c'est le fichier binaire résultant de cette édition de lien qui est téléchargé dans le module.

Dans un second mode de réalisation préférentiel de l'invention, ledit logiciel client comprend un premier fichier binaire, contenant ladite application cliente principale, et au moins un second fichier binaire, contenant chacun au moins une application cliente secondaire.

Dans ce cas, l'application cliente secondaire est donc fournie sous la forme d'un fichier binaire. Ainsi, de même que dans l'autre cas, le fichier source n'est pas communiqué, pour des raisons de préservation du savoir-faire propriétaire (ou "tiers"). Le fichier binaire contenant l'application cliente secondaire peut être téléchargé directement dans le module.

Préférentiellement, pour permettre au logiciel client embarqué de jouer le rôle d'un logiciel client de pilotage :
- le logiciel client embarqué comprend des moyens d'envoi de commandes de pilotage vers les moyens d'exécution compris dans le logiciel principal ;
- le logiciel principal comprend des moyens d'envoi des réponses, résultant de l'exécution de certaines des commandes de pilotage par les moyens d'exécution compris dans le logiciel principal, vers le logiciel client embarqué ;
- le logiciel client embarqué comprend des moyens de traitement des réponses envoyées vers lui par le logiciel principal.

De façon préférentielle, pour permettre au logiciel client embarqué de jouer le rôle d'un logiciel client de supervision :
- le logiciel principal comprend des moyens d'aiguillage de commandes, en fonction d'une politique d'aiguillage de commandes déterminée, de façon à transmettre les commandes de pilotage provenant du logiciel client externe vers le logiciel client embarqué et/ou vers les moyens d'exécution compris dans le logiciel principal ;
- le logiciel client embarqué comprend des moyens de traitement des commandes de pilotage aiguillées vers lui par lesdits moyens d'aiguillage de commandes.

De cette façon, le logiciel client embarqué peut :
- soit n'effectuer aucune action, les commandes étant transmises uniquement au logiciel principal, qui les exécute directement ;
- soit effectuer un filtrage des commandes qui lui sont transmises sans être exécutées par le logiciel principal. Le logiciel client embarqué peut ainsi par exemple décider, en fonction de critères déterminés, quelles commandes doivent être exécutées par le logiciel principal et quelles commandes peuvent faire l'objet d'une réponse sans exécution ;
- soit un "espionnage" des commandes dont il reçoit une copie et qui sont par ailleurs directement exécutées par le logiciel principal.

Avantageusement, le logiciel client embarqué comprend des moyens de sélection de la politique d'aiguillage de commandes appliquée par lesdits moyens d'aiguillage de commandes, parmi un ensemble de politiques d'aiguillage de commandes telles que respectivement :
- les commandes de pilotage provenant du logiciel client externe sont transmises uniquement aux moyens d'exécution compris dans le logiciel principal ;
- les commandes de pilotage provenant du logiciel client externe sont transmises uniquement au logiciel client embarqué ;
- les commandes de pilotage provenant du logiciel client externe sont transmises aux moyens d'exécution compris dans le logiciel principal et au logiciel client embarqué.

De façon avantageuse, lesdits moyens de traitement des commandes prennent, pour chaque commande, au moins une décision appartenant au groupe comprenant :
- envoi de la commande de pilotage vers les moyens d'exécution compris dans le logiciel principal, le logiciel client embarqué comprenant à cet effet des moyens d'envoi de commandes de pilotage vers les moyens d'exécution ;
- fourniture ou non d'une réponse, uniquement en fonction d'au moins une information relative à la commande, sans exécution de la commande, le logiciel client embarqué comprenant à cet effet des moyens d'envoi de la réponse au logiciel client externe, via le logiciel principal.

Avantageusement, pour permettre au logiciel client embarqué de jouer le rôle d'un logiciel client de supervision :
- le logiciel principal comprend des moyens d'aiguillage de réponses, en fonction d'une politique d'aiguillage de réponses déterminée, de façon à transmettre des réponses, résultant de l'exécution de certaines des commandes de pilotage par les moyens d'exécution compris dans le logiciel principal, vers le logiciel client embarqué et/ou vers le logiciel client externe;
- le logiciel client embarqué comprend des moyens de traitement des réponses aiguillées vers lui par lesdits moyens d'aiguillage de réponses.

De cette façon, le logiciel client embarqué peut :
- soit n'effectuer aucune action, les réponses générées par le logiciel principal étant transmises uniquement au logiciel client externe ;
- soit effectuer un filtrage des réponses qui lui sont transmises sans être transmises au logiciel client externe. Le logiciel client embarqué peut ainsi par exemple décider, en fonction de critères déterminés, quelles réponses doivent être transmises au logiciel client externe (en étant ou non modifiées) et quelles réponses ne doivent pas l'être ;
- soit un "espionnage" des réponses dont il reçoit une copie et qui sont par ailleurs directement transmises au logiciel client externe.

De façon avantageuse, le logiciel client embarqué comprend des moyens de sélection de la politique d'aiguillage, de réponses appliquée par lesdits moyens d'aiguillage de réponses, parmi un ensemble de politiques d'aiguillage de réponses telles que respectivement :
- les réponses provenant des moyens d'exécution sont transmises uniquement au logiciel client externe ;
- les réponses provenant des moyens d'exécution sont transmises uniquement au logiciel client embarqué ;
- les réponses provenant des moyens d'exécution sont transmises au logiciel client embarqué et au logiciel client externe.

Préférentiellement, ledit module de radiocommunication est compris dans un dispositif appartenant au groupe comprenant :
- des terminaux de radiocommunication ;
- des dispositifs, autres que des terminaux de radiocommunication, nécessitant une fonctionnalité de communication sans fil ;
- des modems.

Préférentiellement, ledit logiciel principal comprend au moins une application principale, associée à un jeu de fonctions d'exécution, permettant chacune l'exécution d'au moins une desdites commandes de pilotage. Chacune desdites applications clientes principale et secondaire est associée à un jeu de fonctions sources, permettant chacune l'envoi ou la réception, vers ou en provenance de l'application principale, de commandes de pilotage ou de réponses à des commandes de pilotage. Le logiciel principal et/ou ledit logiciel client embarqué comprend(nnent) une application d'interface, permettant l'interfaçage desdites fonctions sources avec lesdites fonctions d'exécution.

Ainsi, on limite les coûts de développement, du fait que l'application d'interface (aussi appelée par la suite "librairie d'interface application"), une fois développée, peut être utilisée avec différentes applications clientes (principales), voire avec différents logiciel principaux.

Dans un mode de réalisation avantageux de l'invention, le jeu de fonctions sources associé à l'application cliente principale comprend notamment une fonction source d'initialisation de l'application cliente principale, qui est appelée au démarrage du module de radiocommunication.

Préférentiellement, le jeu de fonctions sources associé à l'application cliente principale comprend une fonction source d'abonnement à un service d'envoi de messages provenant du logiciel principal. Lors de cet abonnement, l'application cliente principale communique au logiciel principal l'adresse d'une fonction source de traitement d'un message, dans laquelle l'application cliente principale souhaite recevoir des messages provenant du logiciel principal.

C'est ce mécanisme d'abonnement à un service d'envoi de messages provenant du logiciel principal qui permet à l'application cliente principale de faire appel à l'ensemble des fonctions d'exécution offertes par le logiciel principal, en pouvant recevoir les messages envoyés par le logiciel principal dans le cadre de l'exécution de ces fonctions.

De façon préférentielle, le jeu de fonctions sources associé à l'application cliente secondaire comprend notamment une fonction source d'initialisation de l'application cliente secondaire, qui est appelée par l'application cliente principale.

Préférentiellement, le jeu de fonctions sources associé à l'application cliente secondaire comprend une fonction source d'abonnement à un service d'envoi de messages provenant du logiciel principal. Lors de cet abonnement, l'application cliente secondaire communique au logiciel principal l'adresse d'une fonction source de traitement d'un message, dans laquelle l'application cliente secondaire souhaite recevoir des messages provenant du logiciel principal.

Avantageusement, ladite fonction source d'initialisation de l'application cliente secondaire comprend au moins un paramètre permettant la mise en oeuvre d'un mécanisme de dialogue entre l'application cliente principale et l'application cliente secondaire.

Préférentiellement, le jeu de fonctions sources associé à l'application cliente secondaire comprend en outre une fonction source d'arrêt de l'application cliente secondaire, qui est appelée par l'application cliente principale.

De façon préférentielle, le jeu de fonctions sources associé à l'application cliente secondaire comprend une fonction source de désabonnement audit service d'envoi de messages provenant du logiciel principal.

De cette façon, l'application cliente principale n'a à connaître que ce point de dialogue ("fonction source d'initialisation de l'application cliente secondaire"), ainsi que son pendant présenté ci-après ("fonction source d'arrêt de l'application cliente secondaire"). Il s'agit donc d'une solution simple et efficace aux problèmes de dialogue entre application cliente principale et application cliente secondaire. En effet, le développeur d'une application cliente secondaire n'a pas à écrire autant de versions de celle-ci que de clients voulant l'intégrer dans leurs applications clientes principales. Il suffit qu'il leur indique les deux points de dialogue précités.

Il est à noter qu'il convient d'éviter que deux développeurs d'applications clientes secondaires utilisent des points de dialogue identiques. Pour cela, on peut par exemple prévoir que chaque développeur demande auprès d'un service central un identifiant unique pour chaque application cliente secondaire qu'il souhaite développer.

Par ailleurs, le mécanisme de dialogue entre l'application cliente principale et l'application cliente secondaire permet notamment à l'application cliente secondaire de communiquer à l'application cliente principale les résultats de l'exécution de sa ou ses tâches. Le dialogue peut être bidirectionnel ou monodirectionnel.

De façon avantageuse, ledit type du message appartient au groupe comprenant :
- message contenant une réponse à une commande de pilotage préalablement envoyée au logiciel principal par le logiciel client embarqué ;
- message contenant une commande de pilotage non sollicitée ;
- message contenant une commande de pilotage envoyée par un logiciel client externe, via le logiciel principal ;
- message contenant une réponse résultant de exécution par le logiciel principal d'une commande de pilotage envoyée par le logiciel client externe ;
- message envoyé à l'expiration d'une temporisation.

Dans un mode de réalisation particulier de l'invention, ledit jeu de commandes de pilotage est un jeu de commandes AT standard. Ceci permet un développement rapide du logiciel client embarqué, les commandes AT étant bien connues et déjà utilisées pour le développement des logiciels clients externes (hébergés par les équipements tiers). Ceci facilite également le développement d'un logiciel client fortement basé sur un logiciel client externe existant.

L'invention concerne également un procédé de mise en oeuvre d'un logiciel client de pilotage d'un module de radiocommunication, selon la revendication 26.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un mode de réalisation particulier d'un module de radiocommunication selon la présente invention, faisant apparaître l'application cliente principale et l'application cliente secondaire ;
- la figure 2 (art antérieur) illustre le fonctionnement de la technique actuelle de pilotage d'un module de radiocommunication par un équipement tiers ;
- la figure 3 illustre un mécanisme de lancement de l'application cliente principale et d'abonnement de celle-ci à un service d'envoi de messages provenant du logiciel principal ;
- la figure 4 illustre un mécanisme de lancement de l'application cliente secondaire et d'abonnement de celle-ci à un service d'envoi de messages provenant du logiciel principal ;
- la figure 5 illustre un mécanisme d'arrêt de l'application cliente secondaire et de désabonnement de celle-ci au service d'envoi de messages provenant du logiciel principal ;
- la figure 6 illustre un exemple de traitements (envoi d'une commande et réception de la réponse correspondante) pouvant être effectués par l'application cliente secondaire, dans le cas où le module de radiocommunication fonctionne selon un premier mode de réalisation de l'invention, dans lequel le logiciel client embarqué joue le rôle d'un logiciel client de pilotage.

L'invention concerne donc un module de radiocommunication hébergeant et exécutant, avec le même jeu de ressources (processeur et mémoire), un logiciel principal et (au moins) un logiciel client embarqué.

De façon classique, le logiciel principal (par exemple un "logiciel GSM") assure notamment des fonctions de radiocommunication, et comprend des moyens d'exécution de commandes de pilotage (qui lui envoyées par un logiciel client de pilotage).

Le logiciel client embarqué (concept propre à la présente invention) peut jouer :
- le rôle d'un logiciel client de pilotage, et/ou
- le rôle d'un logiciel client de supervision.

Dans la suite de la description, on suppose que les commandes de pilotage sont des commandes AT. Il est clair toutefois que la présente invention n'est nullement limitée à ce type de commande de pilotage.

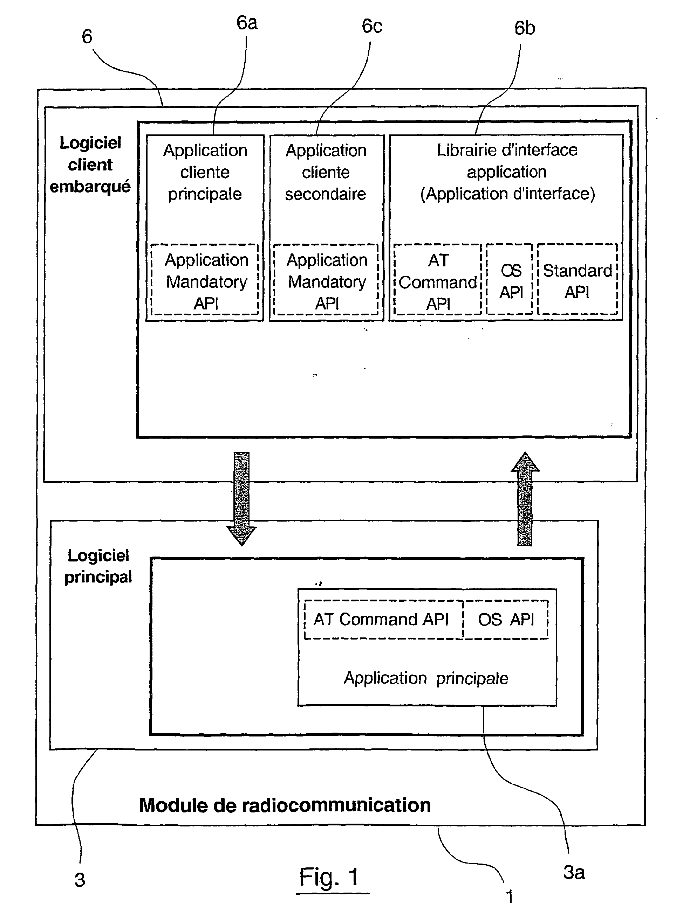

Dans le mode de réalisation particulier illustré sur la **figure 1**, le logiciel principal 3 comprend une application principale 3a, basée notamment sur un jeu de fonctions d'exécution, permettant chacune l'exécution d'au moins une des commandes AT.

Par ailleurs, le logiciel client embarqué 6 comprend :
- une application cliente principale 6a, associée à un jeu de fonctions sources, permettant chacune l'envoi ou la réception, vers ou en provenance de l'application principale 3a, de commandes AT ou de réponses à des commandes AT;
- une application cliente secondaire 6c, également associée à un jeu de fonctions sources tel que précité ;
- une application d'interface 6b, permettant l'interfaçage des fonctions sources (de l'application cliente principale 6a et de l'application cliente secondaire 6c) avec les fonctions d'exécution (de l'application principale 3a).

Ainsi, l'application cliente principale 6a communique avec l'application principale 3a, via l'application d'interface 6b. De même, l'application cliente secondaire 6c communique avec l'application principale 3a, via l'application d'interface 6b.

A cet effet, chaque application (principale 6a, secondaire 6c et d'interface 6b) comprend une interface "API" (pour "Application Programming Interface" en anglais). On rappelle qu'une interface "API" est une description des règles de communication correspondant à un certain ensemble fonctionnel.

L'application cliente principale 6a comprend un bloc "Application Mandatory API", formant interface décrivant des fonctions devant être définies dans l'application cliente principale.

L'application cliente secondaire 6c comprend également un bloc "Application Mandatory API" (partiellement identique au bloc du même nom compris dans l'application cliente principale), formant interface décrivant des fonctions devant être définies dans l'application cliente secondaire.

L'application d'interface (ou librairie d'interface application) 6b comprend les trois blocs suivants :
- un bloc "AT command API", formant interface décrivant l'accès aux commandes AT, cette interface décrit des fonctions se trouvant dans la librairie d'interface application ;
- un bloc "OS API", formant interface décrivant l'accès aux fonctions du système d'exploitation (Operating System), cette interface décrit des fonctions se trouvant dans la librairie d'interface application ;
- un bloc "Standard API", formant interface décrivant l'accès à des fonctions standard, cette interface décrit des fonctions se trouvant dans la librairie d'interface application.

Côté logiciel principal 3, l'application principale 3a comprend :
- un bloc " AT Command API ", pendant du bloc du même nom compris dans l'application d'interface 6b ;
- un bloc "OS API, pendant du bloc du même nom compris dans l'application d'interface 6b.

L'application principale 3a constitue le noyau du logiciel principal 3, et l'application cliente principale 6a, l'application cliente secondaire 6c et l'application d'interface 6b constituent le noyau du logiciel client embarqué 6.

L'application d'interface 6b est par exemple un fichier binaire, qui se présente sous la forme d'une librairie (déjà compilée).

L'application cliente principale 6a est un fichier binaire, résultant d'une édition de lien entre une pluralité de fichiers objets (résultant eux-mêmes de la compilation de fichiers source).

En ce qui concerne l'application cliente secondaire 6c, on peut envisager les deux variantes suivantes :
- soit elle est fournie sous la forme d'un fichier objet. Dans ce cas, ce fichier objet est pris en compte lors de l'édition de lien générant le fichier binaire contenant l'application cliente principale 6a. En d'autres termes, un même fichier binaire contient l'application cliente principale et l'application cliente secondaire ;
- soit elle est fournie directement sous la forme d'un fichier binaire. En d'autres termes, l'application cliente principale 6a et l'application cliente secondaire 6c sont contenues dans deux fichiers binaires distincts.

Le logiciel client embarqué 6 et le logiciel principal 3 utilisent chacun une partie distincte d'une même mémoire vive (RAM). Le client définit la taille de la pile mémoire nécessaire à la bonne exécution du logiciel client embarqué. Une tentative d'accès de l'un des deux logiciels à une partie de la mémoire vive réservée à l'autre logiciel provoque un arrêt de fonctionnement.

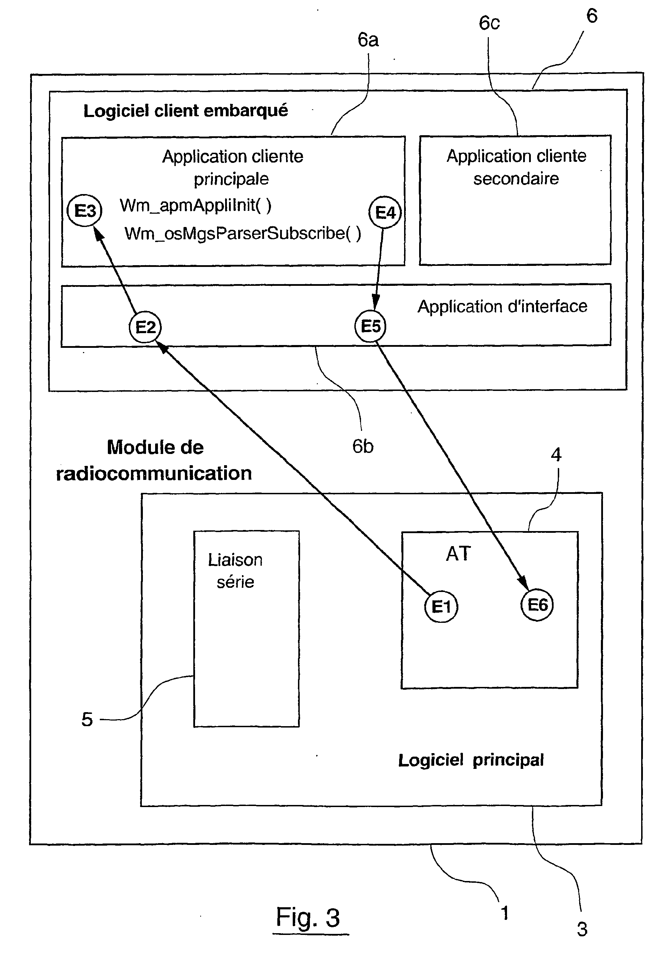

On présente maintenant, en relation avec la **figure 3**, un mécanisme de lancement de l'application cliente principale 6a et d'abonnement de celle-ci à un service d'envoi de messages provenant du logiciel principal 3.

Les éléments compris de façon classique dans un module de radiocommunication, et présentés ci-dessus en relation avec la figure 2 (art antérieur), conservent les mêmes références numériques. Ainsi, le module de radiocommunication 1 héberge et exécute un logiciel principal 3 comprenant notamment des moyens 4 d'exécution des commandes AT.

Par ailleurs, selon l'invention et comme présenté ci-dessus en relation avec la figure 1, le module de radiocommunication 1 héberge et exécute en outre un logiciel client embarqué 6, jouant le rôle d'un logiciel client de pilotage ou d'un logiciel client de supervision, et comprenant notamment une application cliente principale 6a, une application cliente secondaire 6c et une application d'interface 6b.

Le fonctionnement de ce mécanisme de lancement de l'application cliente principale et d'abonnement de celle-ci à un service d'envoi de messages peut être résumé ainsi :
- étape "1" : le logiciel principal 3 détecte la présence d'une application cliente principale 6a et la lance ;
- étape "2" : le lancement de l'application cliente principale 6a se fait via l'application d'interface 6b, qui appelle au sein de l'application cliente principale 6a une fonction source d'initialisation de l'application cliente principale 6a. Cette fonction source ("wm_apmAppliInit") est présentée en détail dans la suite de la description ;
- étape "3" : au sein de l'application cliente principale 6a, la fonction source "wm_apmAppliInit" initialise l'application cliente principale. Comme expliqué en détail dans les étapes suivantes ("4" à "6"), cette initialisation consiste notamment à donner au logiciel principal 3 l'adresse d'une fonction source (par exemple "wm_apmAppliParser") permettant à l'application cliente principale 6a de recevoir des messages provenant du logiciel principal ;
- étape "4" : l'application cliente principale 6a fait appel à une fonction source d'abonnement à un service d'envoi de messages provenant du logiciel principal ("wm_osMsgParserSubscribe"). Cette fonction source est présentée en détail dans la suite de la description ;
- étape "5" : l'application d'interface 6b appelle, au sein du logiciel principal 3, la ou les fonction d'exécution appropriée(s), dite(s) fonction d'enregistrement de l'abonnement (ou inscription) au service d'envoi des messages destinés à l'application cliente principale 6a ;
- étape "6" : le logiciel principal 3 établit l'inscription demandée, via l'application d'interface 6b, par l'application cliente principale 6a.

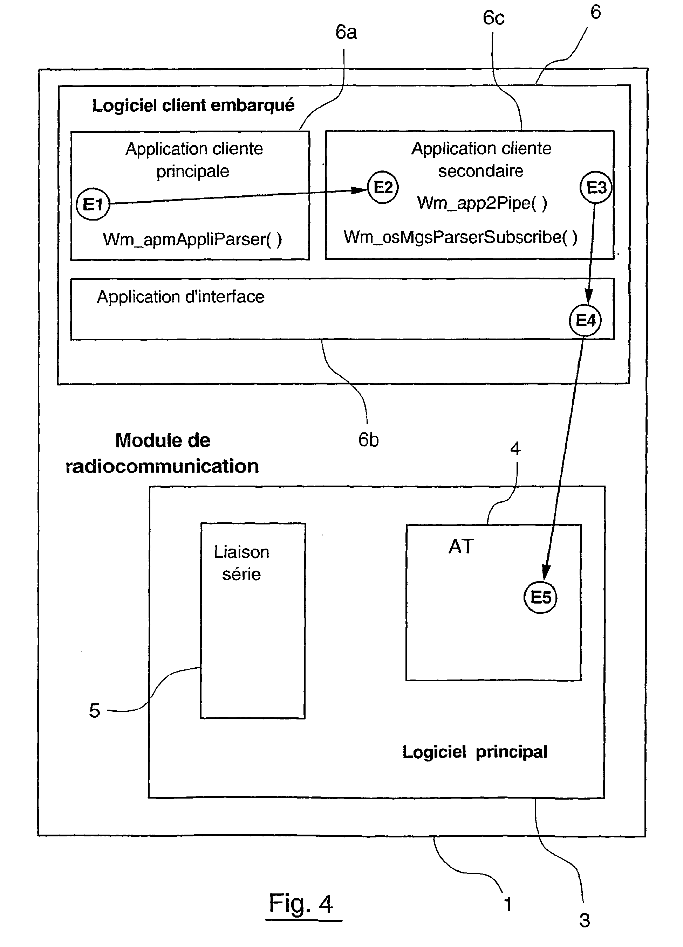

Selon une variante, l'application cliente principale 6a fait appel à la fonction source "wm_osMsgParserSubscribe" quand elle le souhaite (indépendamment de l'exécution de la fonction source d'initialisation de l'application cliente principale 6a). On présente maintenant, en relation avec la **figure 4****,** un mécanisme de lancement de l'application cliente secondaire 6c et d'abonnement de celle-ci à un service d'envoi de messages provenant du logiciel principal 3.
Le fonctionnement de ce mécanisme peut être résumé comme suit :
- étape "1" : l'application cliente principale 6a, après réception d'un message dans sa fonction source "wm_apmAppliParser()", appelle une fonction source de l'application cliente secondaire 6c, à savoir la fonction source d'initialisation de l'application cliente secondaire 6c ("wm_app2Pipe(init)"). Cette fonction source (qui doit être connue de l'application cliente principale 6a) est présentée en détail dans la suite de la description ;
- étape "2" : au sein de l'application cliente secondaire 6c, la fonction source "wm_app2Pipe(init)" initialise l'application cliente secondaire 6c. Comme expliqué en détail dans les étapes suivantes ("3" à "5"), cette initialisation consiste notamment à donner au logiciel principal 3 l'adresse d'une fonction source (par exemple "wm_app2MsgParser") permettant à l'application cliente secondaire 6c de recevoir des messages provenant du logiciel principal 3 ;
- étape "3" : l'application cliente secondaire 6c fait appel à la fonction source d'abonnement à un service d'envoi de messages provenant du logiciel principal ("wm_osMsgParserSubscribe"). Cette fonction source est présentée en détail dans la suite de la description ;
- étape "4" : l'application d'interface 6b appelle, au sein du logiciel principal 3, la ou les fonction d'exécution appropriée(s), dite(s) fonction d'enregistrement de l'abonnement (ou inscription) au service d'envoi des messages destinés à l'application cliente secondaire 6c ;
- étape "5" : le logiciel principal 3 établit l'inscription demandée, via l'application d'interface 6b, par l'application cliente secondaire 6c.

Après qu'elle a été ainsi lancée, l'application cliente secondaire 6c effectue sa fonction (ensemble de traitements ou tâches), de façon autonome par rapport à l'application cliente principale 6a. Comme expliqué en détail ci-après, elle a pour cela à sa disposition l'ensemble des fonctions d'exécution offertes par le logiciel principal 3.

Selon une variante, l'application cliente secondaire 6c fait appel à la fonction source "wm_osMsgParserSubscribe" quand elle le souhaite (indépendamment de l'exécution de la fonction source d'initialisation de l'application cliente secondaire 6c).

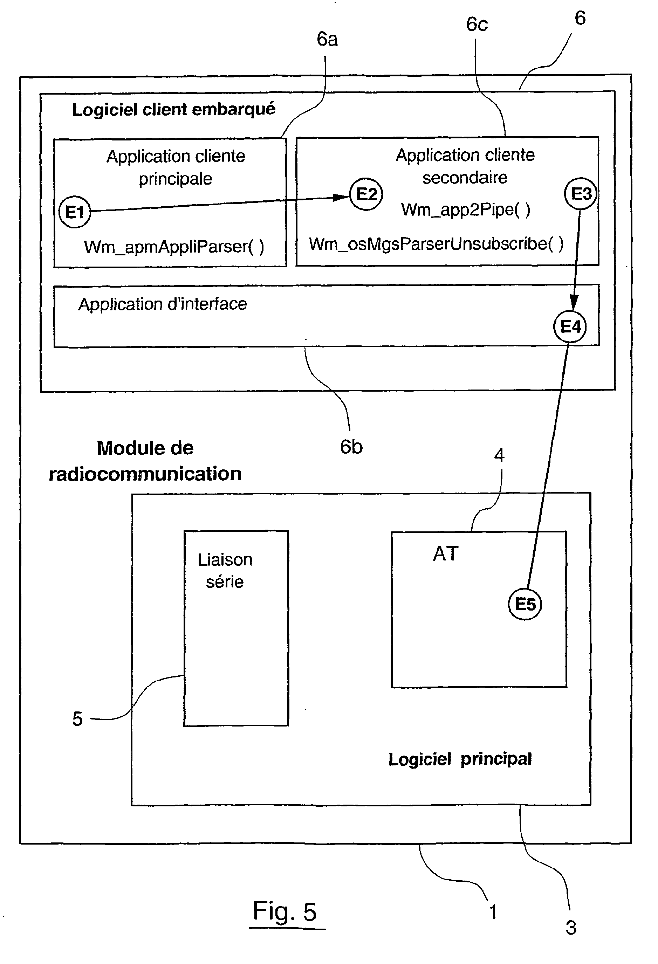

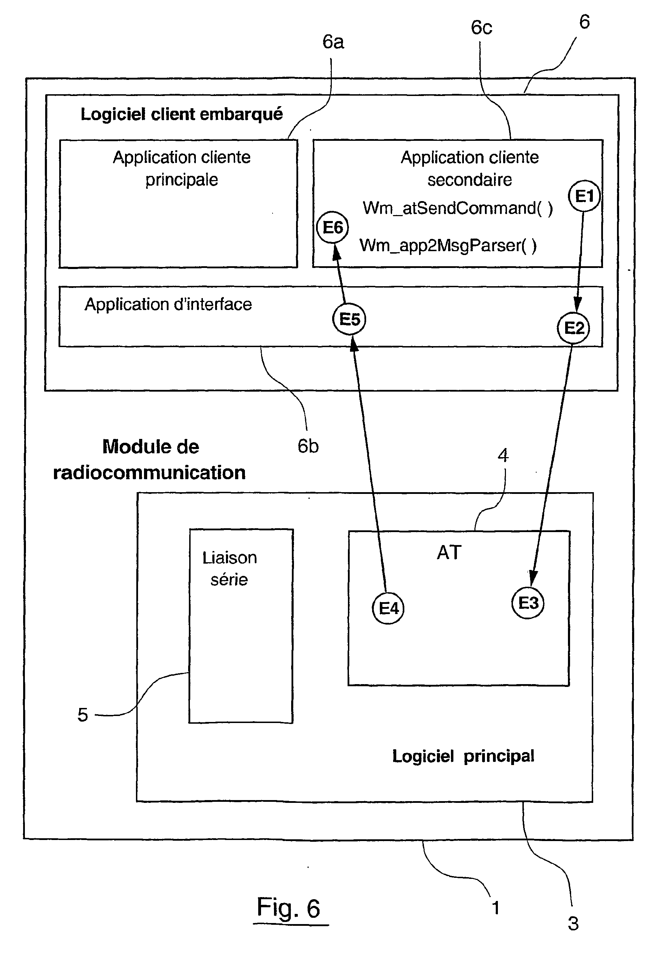

On notera que la fonction source d'initialisation de l'application cliente secondaire peut comprendre au moins un paramètre permettant la mise en oeuvre d'un mécanisme de dialogue entre l'application cliente principale 6a et l'application cliente secondaire 6c. Cette caractéristique de l'invention est décrite en détail dans la suite de la description.
On présente maintenant, en relation avec la **figure 5**, un mécanisme d'arrêt de l'application cliente secondaire 6c et de désabonnement de celle-ci au service d'envoi de messages provenant du logiciel principal 3.
Le fonctionnement de ce mécanisme peut être résumé comme suit :
- étape "1" : l'application cliente principale 6a, après réception d'un message dans sa fonction source wm_apmAppliParser(), appelle une fonction source de l'application cliente secondaire 6c, à savoir la fonction source d'arrêt de l'application cliente secondaire 6c ("wm_app2Pipe(stop)"). Cette fonction source (qui doit être connue de l'application cliente principale 6a) est présentée en détail dans la suite de la description ;
- étape "2" : au sein de l'application cliente secondaire 6c, la fonction source wm_app2Pipe(stop) effectue les traitements d'arrêt de l'application cliente secondaire 6c. Comme expliqué en détail dans les étapes suivantes ("3" à "5"), ces traitements consistent notamment pour l'application cliente secondaire 6c à se désabonner du service d'envoi de messages venant du logiciel principal 3 ;
- étape "3" : l'application cliente secondaire 6c fait appel à la fonction source de désabonnement au service d'envoi de messages provenant du logiciel principal ("wm_osMsgParserUnsubscribe"). Cette fonction source est présentée en détail dans la suite de la description ;
- étape "4" : l'application d'interface 6b appelle, au sein du logiciel principal 3, la ou les fonction d'exécution appropriée(s), dite(s) fonction désabonnement (ou de retrait de l'inscription) au service d'envoi des messages destinés à l'application cliente secondaire 6c ;
- étape "5" : le logiciel principal 3 établit l'arrêt de l'inscription, demandé, via l'application d'interface 6b, par l'application cliente secondaire 6c.
On présente maintenant, en relation avec la **figure 6**, un exemple de traitements pouvant être effectués par l'application cliente secondaire, pour décharger l'application cliente principale 6a.
Dans cet exemple, on suppose que :
- le module de radiocommunication fonctionne selon un **premier mode de réalisation de l'invention,** dans lequel le logiciel client embarqué joue le rôle d'un logiciel client de pilotage ;
- les traitements consistent en l'envoi par l'application cliente secondaire 6c d'une commande et la réception de la réponse correspondante ;
- l'application cliente secondaire 6c a été initialisée et qu'elle s'est abonnée au service d'envoi de messages venant du logiciel principal 3 (cf. figure 4) ;
- lors de l'abonnement, l'application cliente secondaire 6c a donné "wm_app2MsgParser()" comme fonction source de réception des messages.
Le fonctionnement de cet exemple de traitements peut être résumé comme suit :
- étape "1" : l'application secondaire 6c appelle une fonction source d'envoi vers le logiciel principal 3 d'une ou plusieurs commandes AT, afin que ce dernier les exécute (et effectue donc un "traitement de commandes AT"). Cette fonction source ("wm_atSendCommand") est présentée en détail dans la suite de la description ;
- étape "2" : l'application d'interface 6a appelle, au sein des moyens 4 d'exécution compris dans le logiciel principal 3, la ou les fonction d'exécution appropriée(s), dite(s) fonction(s) de traitement des commandes AT ;
- étape "3" : les moyens d'exécution 4 exécutent la ou les commande(s) AT ;
- étape "4" : après exécution, les moyens d'exécutions 4 envoient la ou les réponse(s) AT à l'application cliente secondaire 6c (si la fonction source d'envoi a été paramétrée en ce sens) ;
- étape "5" : cette ou ces réponse(s) est(sont) envoyée(s), à travers l'application d'interface 6a, vers l'application cliente secondaire 6c ;
- étape "6" : au sein de l'application cliente secondaire 6c, la fonction source de réception et traitement "wm_app2MsgParser()" traite la réponse. Cette fonction source est celle que l'application cliente secondaire 6c a donnée lors de l'inscription pour la réception des messages venant du logiciel principal 3. Un paramètre de cette fonction source de réception et traitement est le message qui contient la ou les réponse(s) précitée(s).

On notera que la figure 6 décrite ci-dessus est une transposition de la figure 3 de la demande de brevet française n° FR 0103909 déposée le 22 mars 2001 par la demanderesse (société Wavecom). Elle s'en distingue uniquement en ce que c'est l'application cliente secondaire qui est ici impliquée (au lieu de l"'application cliente embarquée" dans la demande n° FR 0103909).

Il est également prévu un **second mode de réalisation de l'invention,** dans lequel le logiciel client embarqué joue le rôle d'un logiciel client de supervision. Dans ce cas, l'application cliente secondaire peut par exemple effectuer les traitements suivants :
- mise en oeuvre d'un mécanisme d'aiguillage de commandes, permettant à l'application cliente secondaire de filtrer ou espionner les commandes provenant du logiciel client externe ;
- mise en oeuvre d'un mécanisme d'aiguillage de réponses, permettant à l'application cliente secondaire de filtrer ou espionner les réponses destinées au logiciel client externe.

On ne décrit pas ci-après en détail (et on n'illustre par avec des figures) ces exemples de traitements effectués par l'application cliente secondaire, dans le cas où le module de radiocommunication fonctionne selon le second mode de réalisation de l'invention précité.

On notera toutefois qu'un texte explicatif et des figures, relatifs à la mise en oeuvre par l'application cliente secondaire des deux mécanismes d'aiguillage (de commandes et de réponses respectivement) précités, peuvent être obtenus en effectuant la transposition suivante :
- on part des figures 4 à 7 de la demande de brevet française n° FR 0103909 précitée, et du texte explicatif correspondant, et
- on considère que c'est l'application cliente secondaire qui est impliquée (au lieu de l'"application cliente embarquée" dans la demande de brevet n° FR 0103909).

On trouvera en Annexe 1 une présentation détaillée de certaines des fonctions sources sur lesquelles sont basées l'application cliente principale 6a et l'application cliente secondaire 6c.

Dans le cadre de la présente invention, de façon optionnelle, on peut également prévoir d'utiliser, outre les commandes AT standard, au moins une des commandes AT supplémentaires suivantes :
- commande de chargement d'un logiciel client (AT+WDWL), permettant au logiciel client externe de charger dans le module de radiocommunication un nouveau logiciel client, ou une nouvelle partie de logiciel client ;
- commande de désactivation (AT+WOPEN), permettant au logiciel client externe de désactiver le logiciel client embarqué ou une partie du logiciel client embarqué.

### ANNEXE 1 :

### Présentation détaillée de certaines fonctions sources sur lesquelles sont basées l'application cliente principale et l'application cliente secondaire

### A1) "wm apmAppliInit"

Fonction d'initialisation de l'application cliente principale ; est appelée au démarrage du module de radiocommunication.

### Nom exact :

void wm_apmAppliInit (wm_apmInitType_e InitType)

### Paramètres :

```
 InitType
 Ce paramètre permet de déterminer ce qui déclenche l'initialisation, les valeurs sont :
 typedef enum
 {
      WM_APM_POWER_ON,
      WM_APM_REBOOT_FROM_EXCEPTION
 } wm_apmlnitType_e;

 WM_APM_POWER_ON
 Démarrage normal

 WM_APM_REBOOT_FROM_EXCEPTION
```

Le module est redémarré après une exception

### A2) "wm osMsgParserSubscribe()"

Fonction d'inscription d'une l'application cliente (principale ou secondaire) auprès du logiciel principal à un service de réception des messages venant du logiciel principal. Le logiciel principal mémorise cette fonction et s'en servira chaque fois qu'il a quelque chose à transmettre à l'application cliente (principale ou secondaire) concernée.

### Nom exact :

void wm_osMsgParserSubscribe( void (* Subscribefunction)(wm_apmMsg_t *) );

### Paramètres :

SubscribeFunction (wm_apmMsg_t *) : fonction offerte par l'appelant (application cliente principale ou secondaire) pour que le logiciel principal puisse lui envoyer des messages. Un prototype de cette fonction offerte est détaillée après ("wm_apmAppliParser" pour l'application cliente principale, ou "wm_app2MsgParser" pour l'application cliente secondaire).

### Valeur retournée :

La paramètre de retour indique si l'abonnement a été pris en compte (VRAI) ou non (FAUX).

### A3) "wm osMsgParserUnsubscribe()" .

Fonction d'arrêt de l'inscription d'une l'application cliente (principale ou secondaire) auprès du logiciel principal à un service de réception des messages venant du logiciel principal. Le logiciel principal oublie la fonction précédemment mémorisée.

### Nom exact :

bool wm_osMsgParserUnsubscribe( void (* SubsFunction)(wm_apmMsg_t *) );

### Paramètres :

SubsFunction(wm_apmMsg_t *) : fonction offerte par l'appelant (application cliente principale ou secondaire) pour que le logiciel principal puisse lui envoyer des messages. Cette fonction doit être la même que celle donnée lors de l'abonnement à ce service, sinon l'arrêt de l'abonnement ne sera pas pris en compte.

### Valeur retournée :

La paramètre de retour indique si l'arrêt de l'abonnement a été pris en compte (VRAI) ou non (FAUX)

### A4) "wm app2Pipe( FunctionType fonction, ...)" '_'

Prototype de la fonction que doivent offrir l'application cliente secondaire à l'application cliente principale pour pouvoir dialoguer avec elle. Cette fonction est à arguments variables, le nombre et le type des arguments dépend du premier paramètre « fonction ».

### Nom exact :

void wm_app2Pipe( FunctionType fonction, ...) ;

### Paramètres :

fonction : fonction demandée. Elle implique le nombre et le type des paramètres suivants. Certaines valeurs sont réservées (par exemple de 0 à 127), les autres (par exemple de 128 à 255) sont laissées libres pour utilisation par les dialogues particuliers entre l'application cliente principale et l'application cliente secondaire.

### A4-1) Paramètres variables pour fonction = WM_APP_FUNCTION_INIT :

```
 void wm_app2Pipe (
 FunctionType_t fonction,
 InitType t Init,
 void (* MainAppDialogFunction)(wm_apmMsg_t *),
 void *(* SecondaryAppDialogFunction)(wm_apmMsg_t *),
 );
```

L'application secondaire doit s'initialiser et faire son traitement.
InitType_t Init : le type d'initialisation (APM_INIT_POWER_ON ou APM_INTT_REBOOT)
void (* MainAppDialogFunction)(wm_apmMsg_t *) : adresse de la fonction que doit utiliser l'application cliente secondaire pour envoyer des messages à l'application cliente principale. Si une telle fonction n'est pas souhaitée par l'application cliente principale, celle-ci passe une valeur NULL.
void *(* SecondaryAppDialogFunction)(wm_apmMsg *) : L'application cliente secondaire doit donner l'adresse de la fonction qu'elle offre à l'application cliente principale. Si l'application cliente secondaire n'offre pas cette fonction, elle doit positionner la valeur à NULL.

### A4-2) Paramètres variables pour fonction = WM_APP _FUNCTION_STOP :

```
 void wm_app2Pipe (
 FunctionType_t fonction,
 );
```

L'application cliente secondaire doit arrêter ses traitements, se désabonner de tous ses abonnements, et libérer l'ensemble des ressources utilisées.

### A5) "wm apmAppliParser"

Prototype de la fonction source que doit proposer l'application cliente principale pour recevoir des messages venant du logiciel principal. Le message formant paramètre de cette fonction de traitement (aussi dite "de réception") contient notamment une commande AT ou une réponse à une commande AT.

On notera que tout ce qui est décrit ci-dessous s'applique également à la fonction source, dans laquelle l'application cliente secondaire souhaite recevoir des messages provenant du logiciel principal. Seul change le nom de la fonction elle-même (par exemple "wm_app2MsgParser" au lieu de "wm_apmAppliParser").

### Nom exact :

bool wm_apmAppliParser(wm_apmMsg_t * *Message);*

### Paramètres

### Message

La structure du message change avec chaque type de message reçu :

```
  typedef struct
  {
      s16 MsgTyp;
     /* "MsgTyp" est un type de message reçu, qui permet de déterminer la structure
     associée du corps du message */
     wm_apmBody_t Body; /* "Body" est un corps de message spécifique */
  } wm_apmMsg_t;

  Valeurs de "MsgTyp" :

      WM_AT_SEND_RSP
      Le message contient une réponse à une commande AT préalablement envoyée
  au logiciel principal par le logiciel client embarqué

      WM_AT_UNSOLICITED
      Le message contient une commande AT non sollicitée

      WM_AT_CMD_PRE_PARSER
      Le message contient une commande AT envoyée par un logiciel client externe,
  via le logiciel principal

      WM_AT_RSP_PRE_PARSER
      Le message contient une réponse AT résultant de l'exécution par le logiciel
  principal d'une commande AT provenant d'une application externe.

      WM_OS_TIMER
      Le message est envoyé à l'expiration d'une temporisation.
```

La structure du corps est :

```
  typedef union
  {
       /* Sont incluses ici toutes les structures spécifiques associées aux types de
       message "MsgTyp" */
       /* WM_AT_SEND_RSP */
       wm_atResponse_t ATResponse;

       /* WM_AT_UNSOLIClTED */
       wm_atUnsolicited_t ATUnsolicited;

       /* WM_AT_CMD_PRE_PARSER */
        wm_atCmdPreParser_t ATCmdPreParser;

        ;/* WM_AT_RSP_PRE_PARSER */
        wm_atRspPreParser_t ATRspPreParser

       /* WM-OS-TIMER */
        wm_osTimer_t OSTimer;

  } wm_apmBody_t;
```

Les sous-structures du corps sont :
**Corps pour WM_AT_SEND_RSP :**

   ```
      typedef struct {
         wm_atSendRspType_e Type;
         u16 StrLength; /* Longueur de strData */
         char StrData[1]; /* réponse AT */
       } wm_atResponse_t;

      typedef enum {
         WM_AT SEND RSP_TO_EMBEDDED,
         WM_AT_SEND_RSP_TO_EXTERNAL,
         WM_AT_SEND_RSP_BROADCAST
       } wm_atSendRspType_e;

      (voir le détail de la fonction "wm_atSendCommand", pour la description de
      "wm_atSendRspType_e description").
```
**Corps pour WM_AT_UNSOLICITED :**

   ```
      typedef struct {
         wm_atUnsolicited_e Type;
         u16 StrLength;
         char StrData[1];
       } wm_atUnsolicited_t;

      typedef enum {
         WM_AT_UNSOLICITED_TO_EXTERNAL,
         WM_AT_UNSOLICITED_TO_EMBEDDED,
         WM_AT_UNSOLICITED_BROADCAST
       } wm_atUnsolicited_e;

      (voir le détail de la fonction "wm_atUnsolicitedSubscription", pour la
      description de "wm_atUnsolicited_e").
```
**Corps pour WM_AT_CMD_PRE_PARSER :**

   ```
      typedef struct {
         wm_atCmdPreSubscribe_e Type;
         u16 StrLength;
         char StrData[1];
       } wm_atCmdPreParser_t;

      typedef enum {
         WM_AT_CMD_PRE_WAVECOM_TREATMENT, /* Valeur par défaut */
         WM_AT_CMD_PRE_EMBEDDED_TREATMENT,
         WM_AT_CMD_PRE_BROADCAST
      } wm_atCmdPreSubscribe_e;

      (voir le détail de la fonction "wm_atRspPreParserSubscribe", pour la description
      de "wm_atCmdPreSubscribe_e").
```
**Corps pour WM_AT_RSP_PRE_PARSER :**

   ```
      typedef struct {
         wm_atRspPreSubscribe_e Type;
         u16 StrLength;
         char StrData[1];
      } wm_atRspPreParser_t;

      typedef enum {
         WM_AT_RSP_PRE_WAVECOM_TREATMENT, /* Valeur par défaut */
         WM_AT_RSP_PRE_EMBEDDED_TREATMENT,
         WM_AT_RSP_PRE_BROADCAST
      } wm_atRspPreSubscribe_e;

      (voir le détail de la fonction "wm_atRspPreParserSubscribe", pour la description
      de "wm_atRspPreSubscribe_e").
```
**Corps pour WM_OS_TIMER :**

   ```
      typedef struct {
         u8 Ident; /* Identifiant de Temporisation */
      } wm_osTimer_t;

      (voir le détail de la fonction "wm_osStartTimer", pour la description de "Ident").
```

### Valeurs retournées

Le paramètre de retour indique si le message a été traité (VRAI) ou non (FAUX).

### A6) "wm atSendCommand"

fonction d'envoi vers le logiciel principal d'au moins une commande AT, dont un paramètre indique le(s) application(s) destinatrice(s) (à savoir l'application cliente (principale ou secondaire) embarquée et/ou l'application cliente externe) de la réponse résultant de l'exécution de cette commande AT.

### Nom exact :

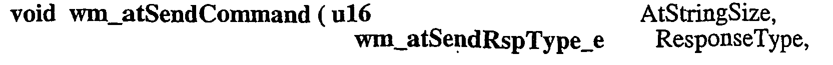

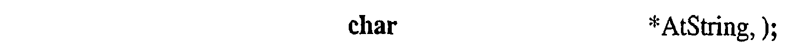

### Paramètres

```
 AtString
  Ce paramètre peut être tout type de chaîne de commandes AT, en caractères ASCII.
  Plusieurs chaînes peuvent être envoyées en même temps.

 AtStringSize
  Taille du paramètre précédent : AtString.

 ResponseType
        Type de la réponse
  typedef enum {
      WM_AT_SEND_RSP_TO_EMBEDDED, /* Valeur par défaut */
      WM_AT_SEND_RSP_TO_EXTERNAL,
      WM_AT SEND_RSP_BROADCAST
  } wm_atSendRspType_e;

  WM_AT_SEND RSP_TO_EMBEDDED
      Toutes les réponses sont redirigées vers l'application cliente (principale ou
      secondaire) embarquée (Embedded application). C'est le mode par défaut.

  WM_AT_SEND_RSP_TO_EXTERNAL
      Toutes les réponses sont redirigées vers l'application cliente externe (PC).

  WM_AT_SEND_RSP_BROADCAST
      Toutes les réponses sont redirigées ("diffusées") vers l'application cliente
      (principale ou secondaire) embarquée et l'application cliente externe (PC).
```

### A7) "wm atUnsolicitedSubscription"

fonction d'inscription auprès du logiciel principal à un service de réception de commandes AT non sollicitées, dont un paramètre indique vers quelle(s) application(s) destinatrice(s) (à savoir l'application cliente (principale ou secondaire) embarquée et/ou l'application cliente externe) doit être redirigée chacune des commandes AT non sollicitées

### Nom exact :

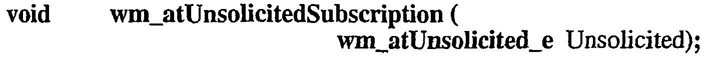

### Paramètres

```
 Unsolicited
  Ce paramètre décrit l'action effectuée quand une commande AT non sollicitée arrive.

  typedef enum {
      WM_AT_UNSOLICITED_TO_EXTERNAL, /* Valeur par défaut */
      WM_AT_UNSOLICITED_TO_EMBEDDED,
      WM_AT_UNSOLICITED_BROADCAST,
  } wm_atUnsolicited_e;

  WM_AT_UNSOLICITED_TO_EXTERNAL
      Toutes les commandes non sollicitées seront redirigées vers l'application cliente
      externe (PC) (mode par défaut)

  WM_AT_UNS OLICITED_TO_EMBEDDED
      Toutes les commandes non sollicitées seront redirigées vers l'application cliente
      (principale ou secondaire) embarquée

  WM_AT_UNSOLICITED_BROADCAST
      Toutes les commandes non sollicitées seront redirigées (diffusées) vers
      l'application cliente externe (PC) et l'application cliente (principale ou
      secondaire) embarquée
```

### A8) "wm atCmdPreParserSubscribe"

fonction d'inscription auprès du logiciel principal à un service d'aiguillage de commandes AT, dont un paramètre indique vers quelle(s) application(s) destinatrice(s) (à savoir l'application cliente (principale ou secondaire) embarquée et/ou l'application principale) doit être aiguillée chacune des commandes AT provenant d'une application externe.

### Nom exact :

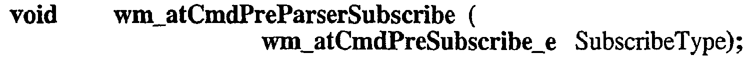

### Paramètres

```
 SubscribeType
  Ce paramètre décrit l'action effectuée quand une commande AT arrive

  typedef enum {
      WM_AT_CMD_PRE_WAVECOM_TREATMENT, /* Valeur par défaut */
      WM_AT_CMD_PRE_EMBEDDED_TREATMENT,
      WM_AT_CMD_PRE_BROADCAST
  } wm_atemdPreSubscribe_e;

  WM_AT_CMD_PRE_WAVECOM_TREATMENT
      L'application cliente (principale ou secondaire) embarquée ne veut pas filtrer (ni
      espionner) les commandes envoyées par l'application cliente externe (mode par
      défaut).

  WM_AT_CMD_PRE_EMBEDDED_TREATMENT
       L'application cliente (principale ou secondaire) embarquée veut filtrer les
       commandes envoyées par l'application cliente externe

 WM_AT_CMD_PRE_BROADCAST
     L'application cliente (principale ou secondaire) embarquée veut espionner les
      commandes envoyées par l'application cliente externe
```

### A9) "wm atRspPreParserSubscribe"

fonction d'inscription auprès du logiciel principal à un service d'aiguillage de réponses, dont un paramètre indique vers quelle(s) application(s) destinatrice(s) (à savoir l'application cliente (principale ou secondaire) embarquée et/ou l'application cliente externe) doit être aiguillée chacune des réponses résultant de l'exécution par le logiciel principal d'une commande AT provenant d'une application externe.

### Nom exact :

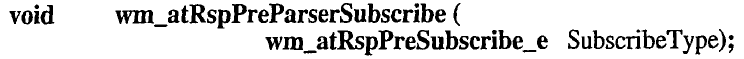

### Paramètres

```
 SubscribeType
   Ce paramètre décrit l'action effectuée quand une commande AT arrive

   typedef enum {
     WM_AT_RSP_PRE_WAVECOM_TREATMENT, /* Valeur par défaut */
     WM_AT_RSP_PRE_EMBEDDED_TREATMENT,
     WM_AT_RSP_PRE BROADCAST
   } wm_atRspPresubscribe_e;

   WM_AT_RSP_PRE_WAVECOM_TREATMENT
     L'application cliente (principale ou secondaire) embarquée ne veut pas filtrer (ni
     espionner) les réponses envoyées à l'application cliente externe (mode par
     défaut).

   WM_AT_RSP_PRE_EMBEDDED_TREATMENT
     L'application cliente (principale ou secondaire) embarquée veut filtrer les
     réponses envoyées à l'application cliente externe.

   WM_AT_RSP_PRE_BROADCAST
     L'application cliente (principale ou secondaire) embarquée veut espionner les
     réponses envoyées à l'application cliente externe.
```

### A10) "wm atSendRspExternalApp"

fonction d'envoi vers le logiciel client externe, via le logiciel principal, d'au moins une réponse. L'utilisation de cette fonction n'est possible que si une inscription préalable au service d'aiguillage de réponses a été effectuée, avec aiguillage d'une copie des réponses notamment vers l'application cliente (principale ou secondaire) embarquée.

### Nom exact :

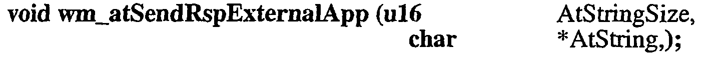

### Paramètres

```
 AtStning
  peut être tout type de chaîne de réponses AT, en caractères ASCII

 AtStringSize
 Taille du paramètre précédent : AtString
```

### A11) "DataFlowService"

fonction d'émission et/ou réception de données par l'application cliente (principale ou secondaire) embarquée, via le logiciel principal, après qu'une communication de données a été établie

### A12) "wm osStartTimer"

fonction d'armement d'une temporisation, un paramètre de ladite fonction d'armement indiquant la temporisation à armer

### A13 "wm osStopTimer"

fonction d'arrêt d'une temporisation, un paramètre de ladite fonction d'arrêt indiquant la temporisation à arrêter

## Revendications

1. Module de radiocommunication, du type hébergeant et exécutant un logiciel principal assurant notamment des fonctions de radiocommunication, ledit logiciel principal comprenant des moyens d'exécution de commandes de pilotage, envoyées au logiciel principal par au moins un logiciel client de pilotage et appartenant à un jeu de commandes de pilotage prédéterminé, **caractérisé en ce que** ledit module de radiocommunication héberge et exécute en outre au moins un logiciel client, dit logiciel client embarqué, comprenant une application cliente principale et au moins une application cliente secondaire, esclave de l'application cliente principale, les traitements effectués par ledit logiciel client embarqué étant répartis entre ladite application cliente principale et ladite au moins une application cliente secondaire, et **en ce que** le logiciel client embarqué et le logiciel principal comprennent des moyens permettant au logiciel client embarqué de jouer au moins un des deux rôles suivants :
- le rôle d'un logiciel client de pilotage, envoyant des commandes de pilotage au logiciel principal, et recevant du logiciel principal des réponses, résultant de l'exécution de certaines des commandes de pilotage ;
- le rôle d'un logiciel client de supervision, gérant l'exécution de commandes de pilotage envoyées par un logiciel client de pilotage, dit logiciel client externe, hébergé et exécuté par un équipement tiers coopérant avec le module de radiocommunication.

2. Module de radiocommunication selon la revendication 1, **caractérisé en ce que** ledit logiciel client comprend un fichier binaire contenant ladite application cliente principale et ladite au moins une application cliente secondaire.

3. Module de radiocommunication selon la revendication 1, **caractérisé en ce que** ledit logiciel client comprend un premier fichier binaire, contenant ladite application cliente principale, et au moins un second fichier binaire, contenant chacun au moins une application cliente secondaire.

4. Module de radiocommunication selon l'une quelconque des revendications 1 à 3, **caractérisé en ce que**, pour permettre au logiciel client embarqué de jouer le rôle d'un logiciel client de pilotage :
- le logiciel client embarqué comprend des moyens d'envoi de commandes de pilotage vers les moyens d'exécution compris dans le logiciel principal ;
- le logiciel principal comprend des moyens d'envoi des réponses, résultant de l'exécution de certaines des commandes de pilotage par les moyens d'exécution compris dans le logiciel principal, vers le logiciel client embarqué ;
- le logiciel client embarqué comprend des moyens de traitement des réponses envoyées vers lui par le logiciel principal.

5. Module de radiocommunication selon l'une quelconque des revendications 1 à 4, **caractérisé en ce que**, pour permettre au logiciel client embarqué de jouer le rôle d'un logiciel client de supervision :
- le logiciel principal comprend des moyens d'aiguillage de commandes, en fonction d'une politique d'aiguillage de commandes déterminée, de façon à transmettre les commandes de pilotage provenant du logiciel client externe vers le logiciel client embarqué et/ou vers les moyens d'exécution compris dans le logiciel principal ;
- le logiciel client embarqué comprend des moyens de traitement des commandes de pilotage aiguillées vers lui par lesdits moyens d'aiguillage de commandes.

6. Module de radiocommunication selon la revendication 5, **caractérisé en ce que** le logiciel client embarqué comprend des moyens de sélection de la politique d'aiguillage de commandes appliquée par lesdits moyens d'aiguillage de commandes, parmi un ensemble de politiques d'aiguillage de commandes telles que respectivement :
- les commandes de pilotage provenant du logiciel client externe sont transmises uniquement aux moyens d'exécution compris dans le logiciel principal ;
- les commandes de pilotage provenant du logiciel client externe sont transmises uniquement au logiciel client embarqué ;
- les commandes de pilotage provenant du logiciel client externe sont transmises aux moyens d'exécution compris dans le logiciel principal et au logiciel client embarqué.

7. Module de radiocommunication selon l'une quelconque des revendications 5 et 6, **caractérisé en ce que** lesdits moyens de traitement des commandes prennent, pour chaque commande, au moins une décision appartenant au groupe comprenant :
- envoi de la commande de pilotage vers les moyens d'exécution compris dans le logiciel principal, le logiciel client embarqué comprenant à cet effet des moyens d'envoi de commandes de pilotage vers les moyens d'exécution ;
- fourniture ou non d'une réponse, uniquement en fonction d'au moins une information relative à la commande, sans exécution de la commande, le logiciel client embarqué comprenant à cet effet des moyens d'envoi de la réponse au logiciel client externe, via le logiciel principal.

8. Module de radiocommunication selon l'une quelconque des revendications 1 à 7, **caractérisé en ce que**, pour permettre au logiciel client embarqué de jouer le rôle d'un logiciel client de supervision :
- le logiciel principal comprend des moyens d'aiguillage de réponses, en fonction d'une politique d'aiguillage de réponses déterminée, de façon à transmettre des réponses, résultant de l'exécution de certaines des commandes de pilotage par les moyens d'exécution compris dans le logiciel principal, vers le logiciel client embarqué et/ou vers le logiciel client externe ;
- le logiciel client embarqué comprend des moyens de traitement des réponses aiguillées vers lui par lesdits moyens d'aiguillage de réponses.

9. Module de radiocommunication selon la revendication 8, **caractérisé en ce que** le logiciel client embarqué comprend des moyens de sélection de la politique d'aiguillage de réponses appliquée par lesdits moyens d'aiguillage de réponses, parmi un ensemble de politiques d'aiguillage de réponses telles que respectivement :
- les réponses provenant des moyens d'exécution sont transmises uniquement au logiciel client externe ;
- les réponses provenant des moyens d'exécution sont transmises uniquement au logiciel client embarqué ;
- les réponses provenant des moyens d'exécution sont transmises au logiciel client embarqué et au logiciel client externe.

10. Module de radiocommunication selon l'une quelconque des revendications 1 à 9, **caractérisé en ce qu'**il est compris dans un dispositif appartenant au groupe comprenant :
- des terminaux de radiocommunication ;
- des dispositifs, autres que des terminaux de radiocommunication, nécessitant une fonctionnalité de communication sansfil ;
- des modems.

11. Module de radiocommunication selon l'une quelconque des revendications 1 àl 0, **caractérisé en ce que** ledit logiciel principal comprend au moins une application principale, associée à un jeu de fonctions d'exécution, permettant chacune l'exécution d'au moins une desdites commandes de pilotage,
**en ce que** chacune desdites applications clientes principale et secondaire est associée à un jeu de fonctions sources, permettant chacune l'envoi ou la réception, vers ou en provenance de l'application principale, de commandes de pilotage ou de réponses à des commandes de pilotage,
et **en ce que** ledit logiciel principal et/ou ledit logiciel client embarqué comprend une application d'interface, permettant l'interfaçage desdites fonctions sources avec lesdites fonctions d'exécution.

12. Module de radiocommunication selon la revendication 11, **caractérisé en ce que** le jeu de fonctions sources associé à l'application cliente principale comprend notamment une fonction source d'initialisation de l'application cliente principale, qui est appelée au démarrage du module de radiocommunication.

13. Module de radiocommunication selon la revendication 12, **caractérisé en ce que** le jeu de fonctions sources associé à l'application cliente principale comprend une fonction source d'abonnement à un service d'envoi de messages provenant du logiciel principal,
et **en ce que** lors de cet abonnement, l'application cliente principale communique au logiciel principal l'adresse d'une fonction source de traitement d'un message, dans laquelle l'application cliente principale souhaite recevoir des messages provenant du logiciel principal.

14. Module de radiocommunication selon l'une quelconque des revendications 11 à 13, **caractérisé en ce que** le jeu de fonctions sources associé à l'application cliente secondaire comprend notamment une fonction source d'initialisation de l'application cliente secondaire, qui est appelée par l'application cliente principale.

15. Module de radiocommunication selon la revendication 14, **caractérisé en ce que** le jeu de fonctions sources associé à l'application cliente secondaire comprend une fonction source d'abonnement à un service d'envoi de messages provenant du logiciel principal ,
et **en ce que** lors de cet abonnement, l'application cliente secondaire communique au logiciel principal l'adresse d'une fonction source de traitement d'un message, dans laquelle l'application cliente secondaire souhaite recevoir des messages provenant du logiciel principal.

16. Module de radiocommunication selon l'une quelconque des revendications 14 et 15, **caractérisé en ce que** ladite fonction source d'initialisation de l'application cliente secondaire comprend au moins un paramètre permettant la mise en oeuvre d'un mécanisme de dialogue entre l'application cliente principale et l'application cliente secondaire.

17. Module de radiocommunication selon l'une quelconque des revendications 14 à 16, **caractérisé en ce que** le jeu de fonctions sources associé à l'application cliente secondaire comprend en outre une fonction source d'arrêt de l'application cliente secondaire, qui est appelée par l'application cliente principale.

18. Module de radiocommunication selon l'une quelconque des revendications 14 à 17, **caractérisé en ce que** le jeu de fonctions sources associé à l'application cliente secondaire comprend une fonction source de désabonnement audit service d'envoi de messages provenant du logiciel principal.

19. Module de radiocommunication selon l'une quelconque des revendications 13 à 18, **caractérisé en ce qu'**un paramètre de ladite fonction source de traitement d'un message provenant du logiciel principal est ledit message, et **en ce que** ledit message formant paramètre possède une structure comprenant :
- un premier champ contenant une information relative au type dudit message ;
- un second champ contenant le corps spécifique dudit message.

20. Module de radiocommunication selon la revendication 19, **caractérisé en ce que** ledit type du message appartient au groupe comprenant :
- message contenant une réponse à une commande de pilotage préalablement envoyée au logiciel principal par le logiciel client embarqué;
- message contenant une commande de pilotage non sollicitée ;
- message contenant une commande de pilotage envoyée par un logiciel client externe, via le logiciel principal ;
- message contenant une réponse résultant de l'exécution par le logiciel principal d'une commande de pilotage envoyée par le logiciel client externe ;
- message envoyé à l'expiration d'une temporisation.

21. Module de radiocommunication selon l'une quelconque des revendications 11 à 20, **caractérisé en ce que** les jeux de fonctions sources associés aux applications clientes principale et secondaire comprennent en outre au moins une fonction source appartenant au groupe comprenant:
- une fonction d'envoi vers le logiciel principal d'au moins une commande de pilotage, un premier paramètre de ladite fonction d'envoi étant ladite au moins une commande de pilotage, un second paramètre de ladite fonction d'envoi indiquant la ou les application(s) destinatrice(s) de la réponse résultant de l'exécution de ladite commande de pilotage, à savoir l'application cliente principale et/ou l'application cliente secondaire comprises dans le logiciel client embarqué, et/ou une application cliente externe comprise dans le logiciel client externe ;
- une fonction d'inscription auprès du logiciel principal à un service de réception de commandes de pilotage non sollicitées, un paramètre de ladite fonction d'inscription indiquant vers quelle(s) application(s) destinatrice(s) doit être redirigée chacune des commandes de pilotage non sollicitées, à savoir l'application cliente principale et/ou l'application cliente secondaire comprises dans le logiciel client embarqué, et/ou une application cliente externe comprise dans le logiciel client externe ;
- une fonction d'inscription auprès du logiciel principal à un service d'aiguillage de commandes de pilotage, un paramètre de ladite fonction d'inscription indiquant vers quelle(s) application(s) doit être aiguillée chacune des commandes de pilotage provenant du logiciel client externe, à savoir l'application cliente principale et/ou l'application cliente secondaire comprises dans le logiciel client embarqué, et/ou le logiciel principal ;
- une fonction d'inscription auprès du logiciel principal à un service d'aiguillage de réponses, un paramètre de ladite fonction d'inscription indiquant vers quelle(s) application(s) doit être aiguillée chacune des réponses résultant de l'exécution par le logiciel principal d'une commande de pilotage, à savoir l'application cliente principale et/ou l'application cliente secondaire comprises dans le logiciel client embarqué,et/ou une application cliente externe comprise dans le logiciel client externe ;
- une fonction d'envoi vers le logiciel client externe, via le logiciel principal, d'au moins une réponse, un paramètre de ladite fonction d'envoi étant ladite au moins une réponse.

22. Module de radiocommunication selon l'une quelconque des revendications 1 à 21, **caractérisé en ce que** le logiciel client embarqué et le logiciel principal utilisent chacun une partie distincte d'une même mémoire vive, une tentative d'accès de l'un des logiciels à une partie de la mémoire vive réservée à l'autre logiciel provoquant un arrêt de fonctionnement.

23. Module de radiocommunication selon l'une quelconque des revendications 1 à 22, **caractérisé en ce que** ledit jeu de commandes de pilotage est un jeu de commandes AT standard.

24. Module de radiocommunication selon la revendication 23, **caractérisé en ce que** ledit jeu de commandes de pilotage comprend, outre les commandes AT standard, une commande AT supplémentaire, dite commande de chargement d'un logiciel client, permettant au logiciel client externe de charger dans le module de radiocommunication un nouveau logiciel client, ou une nouvelle partie de logiciel client.

25. Module de radiocommunication selon l'une quelconque des revendications 23 et 24, **caractérisé en ce que** ledit jeu de commandes de pilotage comprend, outre les commandes AT standard, une commande AT supplémentaire, dite commande de désactivation, permettant au logiciel client externe de désactiver le logiciel client embarqué ou une partie du logiciel client embarqué.

26. Procédé de mise en oeuvre d'un logiciel client de pilotage d'un module de radiocommunication, ledit module de radiocommunication étant du type hébergeant et exécutant un logiciel principal assurant notamment des fonctions de radiocommunication, ledit logiciel principal comprenant des moyens d'exécution de commandes de pilotage, envoyées au logiciel principal par ledit logiciel client de pilotage et appartenant à un jeu de commandes de pilotage prédéterminé, **caractérisé en ce que** le procédé comprend les étapes suivantes exécutées par le module de radiocommunication :
- étape de mise en oeuvre d'un hébergement d'au moins un logiciel client, dit logiciel client embarqué, comprenant une application cliente principale et au moins une application cliente secondaire, esclave de l'application cliente principale ;
- étape d'exécution dudit au moins un logiciel client, les traitements effectués par ledit logiciel client embarqué étant répartis entre ladite application cliente principale et ladite au moins une application cliente secondaire ;
et **en ce que** ledit procédé comprend une étape de dialogue entre le logiciel client embarqué et le logiciel principal de façon que le logiciel client embarqué joue au moins un des deux rôles suivants :
- le rôle dudit logiciel client de pilotage, envoyant des commandes de pilotage au logiciel principal, et recevant du logiciel principal des réponses, résultant de l'exécution de certaines des commandes de pilotage ;
- le rôle d'un logiciel client de supervision, gérant l'exécution de commandes de pilotage envoyées par ledit logiciel client de pilotage, ledit logiciel client de pilotage, dit logiciel client externe, étant hébergé et exécuté par un équipement tiers coopérant avec le module de radiocommunication »

## Claims

1. Radiocommunication module, of the type hosting and executing a main software program providing in particular radiocommunication functions, said main software program comprising means of executing control commands, sent to the main software program by at least one client control software program and belonging to a predetermined set of control commands, **characterised in that** said radiocommunication module also hosts and executes at least one client software program, referred to as an embedded client software program, comprising a main client application and at least one secondary client application, a slave of the main client application, the processing operations performed by said embedded client software program being distributed between said main client application and said at least one secondary client application, and **in that** the embedded client software program and the main software program comprise means allowing the embedded client software program to play at least one of the following two roles:
- the role of a client control software program, sending control commands to the main software program, and receiving, from the main software program, responses, resulting from the execution of certain of the control commands;
- the role of a client supervision software program, managing the execution of control commands sent by a client control software program, referred to as an external client software program, hosted and executed by third-party equipment cooperating with the radiocommunication module.

2. Radiocommunication module according to Claim 1, **characterised in that** said client software program comprises a binary file containing said main client application and said at least one secondary client application.

3. Radiocommunication module according to Claim 1, **characterised in that** said client software program comprises a first binary file, containing said main client application, and at least one second binary file, each containing at least one secondary client application.

4. Radiocommunication module according to any one of Claims 1 to 3, **characterised in that**, in order to allow the embedded client software program to play the role of a client control software program:
- the embedded client software program comprises means of sending control commands to the execution means included in the main software program;
- the main software program comprises means of sending responses, resulting from the execution of certain of the control commands by the execution means included in the main software program, to the embedded client software program;
- the embedded client software program comprises means of processing the responses sent to it by the main software program.

5. Radiocommunication module according to any one of Claims 1 to 4, **characterised in that**, in order to allow the embedded client software program to play the role of a client supervision software program:
- the main software program comprises means of directing commands, according to a given command directing policy, so as to transmit the control commands coming from the external client software program to the embedded client software program and/or to the execution means included in the main software program;
- the embedded client software program comprises means of processing the control commands directed to it by said command directing means.

6. Radiocommunication module according to Claim 5, **characterised in that** the embedded client software program comprises means of selecting the command directing policy applied by said command directing means, from amongst a set of command directing policies such that respectively:
- the control commands coming from the external client software program are transmitted solely to the execution means included in the main software program;
- the control commands coming from the external client software program are transmitted solely to the embedded client software program;
- the control commands coming from the external client software program are transmitted to the execution means included in the main software program and to the embedded client software program.

7. Radiocommunication module according to either one of Claims 5 and 6, **characterised in that** said command processing means take, for each command, at least one decision belonging to the group comprising:
- sending the control command to the execution means included in the main software program, the embedded client software program to that end comprising means of sending control commands to the execution means;
- providing or not a response, solely according to at least one information item relating to the command, without executing the command, the embedded client software program to that end comprising means of sending the response to the external client software pro gram, via the main software pro gram.

8. Radiocommunication module according to any one of Claims 1 to 7, **characterised in that**, in order to allow the embedded client software program to play the role of a client supervision software program:
- the main software program comprises means of directing responses, according to a given response directing policy, so as to transmit responses, resulting from the execution of certain of the control commands by the execution means included in the main software program, to the embedded client software program and/or to the external client software program;
- the embedded client software program comprises means of processing the responses directed to it by said response directing means.

9. Radiocommunication module according to Claim 8, **characterised in that** the embedded client software program comprises means of selecting the response directing policy applied by said response directing means, from amongst a set of response directing policies such that respectively:
- the responses coming from the execution means are transmitted solely to the external client software program;
- the responses coming from the execution means are transmitted solely to the embedded client software program;
- the responses coming from the execution means are transmitted to the embedded client software program and to the external client software program.

10. Radiocommunication module according to any one of Claims 1 to 9, **characterised in that** it is included in a device belonging to the group comprising:
- radio communication terminals;
- devices, other than radiocommunication terminals, requiring a wireless communication functionality;
- modems.

11. Radiocommunication module according to any one of Claims 1 to 10, **characterised in that** said main software program comprises at least one main application, associated with a set of execution functions, each allowing the execution of at least one of said control commands,
**in that** each of said main and secondary client applications is associated with a set of source functions, each allowing the sending or receiving, to or from the main application, of control commands or responses to control commands,
and **in that** said main software program and/or said embedded client software program comprises an interface application, allowing the interfacing of said source functions with said execution functions.

12. Radiocommunication module according to Claim 11, **characterised in that** the set of source functions associated with the main client application comprises in particular a source function for initialising the main client application, which is called at the start-up of the radio communication module.

13. Radiocommunication module according to Claim 12, **characterised in that** the set of source functions associated with the main client application comprises a source function for subscribing to a service for sending messages coming from the main software program,
and **in that**, at the time of this subscription, the main client application communicates to the main software program the address of a source function for processing a message, in which the main client application wishes to receive messages coming from the main software program.

14. Radiocommunication module according to any one of Claims 11 to 13, **characterised in that** the set of source functions associated with the secondary client application comprises in particular a source function for initialising the secondary client application, which is called by the main client application.

15. Radiocommunication module according to Claim 14, **characterised in that** the set of source functions associated with the secondary client application comprises a source function for subscribing to a service for sending messages coming from the main software program,
and **in that**, at the time of this subscription, the secondary client application communicates to the main software program the address of a source function for processing a message, in which the secondary client application wishes to receive messages coming from the main software program.

16. Radiocommunication module according to either one of Claims 14 and 15, **characterised in that** said source function for initialising the secondary client application comprises at least one parameter allowing the implementation of a mechanism for dialogue between the main client application and the secondary client application.

17. Radiocommunication module according to any one of Claims 14 to 16, **characterised in that** the set of source functions associated with the secondary client application also comprises a source function for stopping the secondary client application, which is called by the main client application.

18. Radiocommunication module according to any one of Claims 14 to 17, **characterised in that** the set of source functions associated with the secondary client application comprises a source function for unsubscribing from said service for sending messages coming from the main software program.

19. Radiocommunication module according to any one of Claims 13 to 18, **characterised in that** a parameter of said source function for processing a message coming from the main software program is said message, and **in that** said message forming a parameter possesses a structure comprising:
- a first field containing an information item relating to the type of said message;
- a second field containing the specific body of said message.

20. Radiocommunication module according to Claim 19, **characterised in that** said message type belongs to the group comprising:
- message containing a response to a control command previously sent to the main software program by the embedded client software program;
- message containing an unsolicited control command;
- message containing a control command sent by an external client software program, via the main software program;
- message containing a response resulting from the execution by the main software program of a control command sent by the external client software program;
- message sent on expiry of a timer.

21. Radiocommunication module according to any one of Claims 11 to 20, **characterised in that** the sets of source functions associated with the main and secondary client applications also comprise at least one source function belonging to the group comprising:
- a function for sending to the main software program at least one control command, a first parameter of said sending function being said at least one control command, a second parameter of said sending function indicating the destination application or applications of the response resulting from the execution of said control command, namely the main client application and/or the secondary client application included in the embedded client software program, and/or an external client application included in the external client software program;
- a function for registering with the main software program to a service for receiving unsolicited control commands, a parameter of said registration function indicating to which destination application or applications each of the unsolicited control commands is to be redirected, namely the main client application and/or the secondary client application included in the embedded client software program, and/or an external client application included in the external client software program;
- a function for registering with the main software program to a control command directing service, a parameter of said registration function indicating to which application or applications each of the control commands coming from the external client software program is to be directed, namely the main client application and/or the secondary client application included in the embedded client software program, and/or the main software program;
- a function for registering with the main software program to a response directing service, a parameter of said registration function indicating to which application or applications each of the responses resulting from the execution by the main software program of a control command is to be directed, namely the main client application and/or the secondary client application included in the embedded client software program, and/or an external client application included in the external client software program;
- a function for sending to the external client software program, via the main software program, at least one response, a parameter of said sending function being said at least one response.

22. Radiocommunication module according to any one of Claims 1 to 21, **characterised in that** the embedded client software program and the main software program each use a distinct part of the same random access memory, an access attempt by one of the software programs to a part of the random access memory reserved for the other software program causing operation to stop.

23. Radiocommunication module according to any one of Claims 1 to 22, **characterised in that** said set of control commands is a set of standard AT commands.

24. Radiocommunication module according to Claim 23, **characterised in that** said set of control commands comprises, besides the standard AT commands, an additional AT command, referred to as a client software program load command, allowing the external client software program to load into the radiocommunication module a new client software program, or a new client software program part.

25. Radiocommunication module according to either one of Claims 23 and 24, **characterised in that** said set of control commands comprises, besides the standard AT commands, an additional AT command, referred to as a deactivation command, allowing the external client software program to deactivate the embedded client software program or part of the embedded client software program.

26. Method of implementing a client control software program of a radiocommunication module, said radiocommunication module being of the type hosting and executing a main software program providing in particular radiocommunication functions, said main software program comprising means of executing control commands, sent to the main software program by said client control software program and belonging to a predetermined set of control commands, **characterised in that** the method comprises the following steps executed by the radiocommunication module:
- step of implementing hosting of at least one client software program, referred to as an embedded client software program, comprising a main client application and at least one secondary client application, a slave of the main client application;
- step of executing said at least one client software program, the processing operations performed by said embedded client software program being distributed between said main client application and said at least one secondary client application;
and **in that** said method comprises a step of dialogue between the embedded client software program and the main software program so that the embedded client software program plays at least one of the following two roles:
- the role of said client control software program, sending control commands to the main software program, and receiving, from the main software program, responses, resulting from the execution of certain of the control commands;
- the role of a client supervision software program, managing the execution of control commands sent by said client control software program, said client control software program, referred to as an external client software program, being hosted and executed by third-party equipment cooperating with the radiocommunication module.

## Patentansprüche

1. Funkkommunikationsmodul des Typs, der eine Hauptsoftware hostet und ausführt, die insbesondere Funkkommunikationsfunktionen wahrnimmt, wobei die Hauptsoftware Mittel zum Ausführen von Steuerbefehlen umfasst, die von mindestens einer Steuer-Clientsoftware an die Hauptsoftware gesendet werden und einem vorgegebenen Satz von Steuerbefehlen angehören, **dadurch gekennzeichnet, dass** das Funkkommunikationsmodul darüber hinaus mindestens eine Clientsoftware hostet und ausführt, die eingebettete Clientsoftware genannt wird und die eine Haupt-Clientanwendung und mindestens eine Neben-Clientanwendung, die Slave der Haupt-Clientanwendung ist, umfasst, wobei die von der eingebetteten Clientsoftware ausgeführten Verarbeitungen zwischen der Haupt-Clientanwendung und der mindestens einen Neben-Clientanwendung verteilt werden, und dass die eingebettete Clientsoftware und die Hauptsoftware Mittel umfassen, die es der eingebetteten Clientsoftware ermöglichen, mindestens eine der beiden folgenden Rollen zu spielen:
- die Rolle einer Steuer-Clientsoftware, welche Steuerbefehle an die Hauptsoftware sendet und von der Hauptsoftware Antworten empfängt, die das Ergebnis der Ausführung bestimmter Steuerbefehle sind;
- die Rolle einer Überwachungsclientsoftware, welche die Ausführung von Steuerbefehlen verwaltet, die von einer Steuer-Clientsoftware gesendet werden, die externe Clientsoftware genannt wird und von einer Dritteinrichtung gehostet und ausgeführt wird, die mit dem Funkkommunikationsmodul zusammenwirkt.

2. Funkkommunikationsmodul nach Anspruch 1, **dadurch gekennzeichnet, dass** die Clientsoftware eine Binärdatei umfasst, die die Haupt-Clientanwendung und die mindestens eine Neben-Clientanwendung enthält.

3. Funkkommunikationsmodul nach Anspruch 1, **dadurch gekennzeichnet, dass** die Clientsoftware eine erste Binärdatei umfasst, die die Haupt-Clientanwendung enthält, und mindestens eine zweite Binärdatei, die jeweils mindestens eine Neben-Clientanwendung enthält.

4. Funkkommunikationsmodul nach einem beliebigen der Ansprüche 1 bis 3, **dadurch gekennzeichnet, dass**, um der eingebetteten Clientsoftware das Spielen der Rolle einer Steuer-Clientsoftware zu ermöglichen:
- die eingebettete Clientsoftware Mittel zum Senden von Steuerbefehlen an die in der Hauptsoftware enthaltenen Ausführungsmittel umfasst;
- die Hauptsoftware Mittel zum Senden der Antworten, die das Ergebnis der Ausführung bestimmter Steuerbefehle durch die in der Hauptsoftware enthaltenen Ausführungsmittel sind, an die eingebettete Clientsoftware umfasst;
- die eingebettete Clientsoftware Mittel zur Verarbeitung der von der Hauptsoftware an sie gesendeten Antworten umfasst.

5. Funkkommunikationsmodul nach einem beliebigen der Ansprüche 1 bis 4, **dadurch gekennzeichnet, dass**, um der eingebetteten Clientsoftware das Spielen der Rolle einer Überwachungsclientsoftware zu ermöglichen:
- die Hauptsoftware Mittel zum Lenken von Befehlen in Abhängigkeit von einer vorgegebenen Befehlslenkstrategie umfasst, so dass die von der Clientsoftware kommenden Steuerbefehle zur eingebetteten Clientsoftware und/oder zu den in der Hauptsoftware enthaltenen Ausführungsmitteln übertragen werden;
- die eingebettete Clientsoftware Mittel zur Verarbeitung der Steuerbefehle umfasst, die von diesen Befehlslenkmitteln zu ihr gelenkt werden.

6. Funkkommunikationsmodul nach Anspruch 5, **dadurch gekennzeichnet, dass** die eingebettete Clientsoftware Mittel zum Auswählen der von den Befehlslenkmitteln angewandten Befehlslenkstrategie aus einer Gruppe von Befehlslenkstrategien umfasst, so dass:
- die von der externen Clientsoftware kommenden Steuerbefehle nur zu den in der Hauptsoftware enthaltenen Ausführungsmitteln übertragen werden;
- die von der externen Clientsoftware kommenden Steuerbefehle nur zur eingebetteten Clientsoftware übertragen werden;
- die von der externen Clientsoftware kommenden Steuerbefehle zu den in der Hauptsoftware und in der eingebetteten Clientsoftware enthaltenen Ausführungsmitteln übertragen werden.

7. Funkkommunikationsmodul nach einem beliebigen der Ansprüche 5 und 6, **dadurch gekennzeichnet, dass** die Mittel zur Verarbeitung der Befehle für jeden Befehl mindestens eine Entscheidung aus der Folgendes umfassenden Gruppe treffen:
- Senden des Steuerbefehls an die in der Hauptsoftware enthaltenen Ausführungsmittel, wobei die eingebettete Clientsoftware zu diesem Zweck Mittel zum Senden von Steuerbefehlen an die Ausführungsmittel umfasst;
- Bereitstellen oder Nichtbereitstellen einer Antwort ausschließlich in Abhängigkeit von mindestens einer den Befehl betreffenden Information, ohne den Befehl auszuführen, wobei die eingebettete Clientsoftware zu diesem Zweck Mittel zum Senden der Antwort über die Hauptsoftware an die externe Clientsoftware umfasst.

8. Funkkommunikationsmodul nach einem beliebigen der Ansprüche 1 bis 7, **dadurch gekennzeichnet, dass**, um der eingebetteten Clientsoftware das Spielen der Rolle einer Überwachungsclientsoftware zu ermöglichen:
- die Hauptsoftware Mittel zum Lenken von Antworten in Abhängigkeit von einer vorgegebenen Antwortlenkstrategie umfasst, so dass Antworten, die das Ergebnis der Ausführung bestimmter Steuerbefehle durch die in der Hauptsoftware enthaltenen Ausführungsmittel sind, zur eingebetteten Clientsoftware und/oder zur externen Clientsoftware übertragen werden;
- die eingebettete Clientsoftware Mittel zur Verarbeitung der Antworten umfasst, die von diesen Antwortlenkmitteln zu ihr gelenkt werden.

9. Funkkommunikationsmodul nach Anspruch 8, **dadurch gekennzeichnet, dass** die einbettete Clientsoftware Mittel zum Auswählen der von den Antwortlenkmitteln angewandten Antwortlenkstrategie aus einer Gruppe von Antwortlenkstrategien umfasst, so dass:
- die von den Ausführungsmitteln kommenden Antworten nur zur externen Clientsoftware übertragen werden;
- die von den Ausführungsmitteln kommenden Antworten nur zur eingebetteten Clientsoftware übertragen werden;
- die von den Ausführungsmitteln kommenden Antworten zur eingebetteten Clientsoftware und zur externen Clientsoftware übertragen werden.

10. Funkkommunikationsmodul nach einem beliebigen der Ansprüche 1 bis 9, **dadurch gekennzeichnet, dass** es in einer Vorrichtung enthalten ist, die der Folgendes umfassenden Gruppe angehört:
- Funkkommunikationsendgeräte;
- andere Vorrichtungen als Funkkommunikationsendgeräte, die eine Funktionalität zur drahtlosen Kommunikation erfordern;
- Modems.

11. Funkkommunikationsmodul nach einem beliebigen der Ansprüche 1 bis 10, **dadurch gekennzeichnet, dass** die Hauptsoftware mindestens eine Hauptanwendung umfasst, die mit einem Satz Ausführungsfunktionen verknüpft ist, von denen jede die Ausführung von mindestens einem der Steuerbefehle ermöglicht,
dass jede dieser Haupt- und Neben-Clientanwendungen mit einem Satz Quellfunktionen verknüpft ist, die jeweils das Senden oder Empfangen von Steuerbefehlen oder Antworten auf Steuerbefehle zur oder von der Hauptanwendung ermöglichen,
und dass die Hauptsoftware und/oder die eingebettete Clientsoftware eine Schnittstellenanwendung umfasst, die das Koppeln der Quellfunktionen mit den Ausführungsfunktionen ermöglicht.

12. Funkkommunikationsmodul nach Anspruch 11, **dadurch gekennzeichnet, dass** der mit der Haupt-Clientanwendung verknüpfte Quellfunktionssatz insbesondere eine Quellfunktion zur Initialisierung der Haupt-Clientanwendung umfasst, die beim Starten des Funkkommunikationsmoduls aufgerufen wird.

13. Funkkommunikationsmodul nach Anspruch 12, **dadurch gekennzeichnet, dass** der mit der Haupt-Clientanwendung verknüpfte Quellfunktionssatz eine Quellfunktion zum Anmelden bei einem Dienst zum Senden von Nachrichten von der Hauptsoftware umfasst,
und dass bei diesem Anmelden die Haupt-Clientanwendung der Hauptsoftware die Adresse einer Quellfunktion zur Verarbeitung einer Nachricht mitteilt, in der die Haupt-Clientanwendung von der Hauptsoftware kommende Nachrichten empfangen möchte.

14. Funkkommunikationsmodul nach einem beliebigen der Ansprüche 11 bis 13, **dadurch gekennzeichnet, dass** der mit der Neben-Clientanwendung verknüpfte Quellfunktionssatz insbesondere eine Quellfunktion zur Initialisierung der Neben-Clientanwendung umfasst, die von der Haupt-Clientanwendung aufgerufen wird.

15. Funkkommunikationsmodul nach Anspruch 14, **dadurch gekennzeichnet, dass** der mit der Neben-Clientanwendung verknüpfte Quellfunktionssatz eine Quellfunktion zum Anmelden bei einem Dienst zum Senden von Nachrichten von der Hauptsoftware umfasst,
und dass bei diesem Anmelden die Neben-Clientanwendung der Hauptsoftware die Adresse einer Quellfunktion zur Verarbeitung einer Nachricht mitteilt, in der die Neben-Clientanwendung von der Hauptsoftware kommende Nachrichten empfangen möchte.

16. Funkkommunikationsmodul nach einem beliebigen der Ansprüche 14 und 15, **dadurch gekennzeichnet, dass** die Quellfunktion zur Initialisierung der Neben-Clientanwendung mindestens einen Parameter umfasst, der das Durchführen eines Dialogmechanismus zwischen der Haupt-Clientanwendung und der Neben-Clientanwendung ermöglicht.

17. Funkkommunikationsmodul nach einem beliebigen der Ansprüche 14 bis 16, **dadurch gekennzeichnet, dass** der mit der Neben-Clientanwendung verknüpfte Quellfunktionssatz darüber hinaus eine Quellfunktion zum Stoppen der Neben-Clientanwendung umfasst, die von der Haupt-Clientanwendung aufgerufen wird.

18. Funkkommunikationsmodul nach einem beliebigen der Ansprüche 14 bis 17, **dadurch gekennzeichnet, dass** der mit der Neben-Clientanwendung verknüpfte Quellfunktionssatz eine Quellfunktion zum Abmelden bei dem Dienst zum Senden von Nachrichten von der Hauptsoftware umfasst.

19. Funkkommunikationsmodul nach einem beliebigen der Ansprüche 13 bis 18, **dadurch gekennzeichnet, dass** ein Parameter der Quellfunktion zur Verarbeitung einer von der Hauptsoftware kommenden Nachricht in dieser Nachricht besteht und dass diese einen Parameter bildende Nachricht eine Struktur besitzt, die Folgendes umfasst:
- ein erstes Feld, das eine Information bezüglich des Typs der Nachricht enthält;
- ein zweites Feld, das den spezifischen Hauptteil der Nachricht enthält.

20. Funkkommunikationsmodul nach Anspruch 19, **dadurch gekennzeichnet, dass** der Typ der Nachricht der Gruppe angehört, die Folgendes umfasst:
- Nachricht, die eine Antwort auf einen Steuerbefehl enthält, der zuvor von der eingebetteten Clientsoftware an die Hauptsoftware gesendet wurde;
- Nachricht, die einen nicht angeforderten Steuerbefehl enthält;
- Nachricht, die einen Steuerbefehl enthält, der von einer externen Clientsoftware über die Hauptsoftware gesendet wurde;
- Nachricht, die eine Antwort enthält, die das Ergebnis der Ausführung eines von der externen Clientsoftware gesendeten Steuerbefehls durch die Hauptsoftware ist;
- Nachricht, die bei Ablauf einer Verzögerungszeit gesendet wird.

21. Funkkommunikationsmodul nach einem beliebigen der Ansprüche 11 bis 20, **dadurch gekennzeichnet, dass** die mit den Haupt- und Neben-Clientanwendungen verknüpften Quellfunktionssätze darüber hinaus mindestens eine Quellfunktion umfassen, die der Folgendes umfassenden Gruppe angehört:
- eine Funktion zum Senden von mindestens einem Steuerbefehl zur Hauptsoftware, wobei ein erster Parameter dieser Sendefunktion dieser mindestens eine Steuerbefehl ist und ein zweiter Parameter dieser Sendefunktion die Empfängeranwendung(en) für die Antwort angibt, die das Ergebnis der Ausführung des Steuerbefehls ist, d.h. die Haupt-Clientanwendung und/oder die Neben-Clientanwendung, die in der einbetteten Clientsoftware enthalten sind, und/oder eine externe Clientanwendung, die in der externen Clientsoftware enthalten ist;
- eine Funktion zum Eintragen für einen Dienst zum Empfangen von nicht angeforderten Steuerbefehlen bei der Hauptsoftware, wobei ein Parameter dieser Eintragungsfunktion angibt, zu welcher (welchen) Empfängeranwendung(en) jeder der nicht angeforderten Steuerbefehle umgeleitet werden soll, d.h. zur Haupt-Clientanwendung und/oder Neben-Clientanwendung, die in der eingebetteten Clientsoftware enthalten sind, und/oder zu einer externen Clientanwendung, die in der externen Clientsoftware enthalten ist;
- eine Funktion zum Eintragen für einen Dienst zum Lenken von Steuerbefehlen bei der Hauptsoftware, wobei ein Parameter dieser Eintragungsfunktion angibt, zu welcher (welchen) Anwendung(en) jeder der von der externen Clientsoftware kommenden Steuerbefehle gelenkt werden soll, d.h. zur Haupt-Clientanwendung und/oder zur Neben-Clientanwendung, die in der eingebetteten Clientsoftware enthalten sind, und/oder zur Hauptsoftware;
- eine Funktion zum Eintragen für einen Dienst zum Lenken von Antworten bei der Hauptsoftware, wobei ein Parameter dieser Eintragungsfunktion angibt, zu welcher (welchen) Anwendung(en) jede der Antworten, die das Ergebnis der Ausführung eines Steuerbefehls durch die Hauptsoftware sind, gelenkt werden soll, d.h. zur Haupt-Clientanwendung und/oder zur Neben-Clientanwendung, die in der eingebetteten Clientsoftware enthalten sind, und/oder zu einer externen Clientanwendung, die in der externen Clientsoftware enthalten ist;
- eine Funktion zum Senden von mindestens einer Antwort über die Hauptsoftware zur externen Clientsoftware, wobei ein Parameter dieser Sendefunktion in dieser mindestens einen Antwort besteht.

22. Funkkommunikationsmodul nach einem beliebigen der Ansprüche 1 bis 21, **dadurch gekennzeichnet, dass** die eingebettete Clientsoftware und die Hauptsoftware jeweils einen unterschiedlichen Teil desselben Schreib-Lese-Speichers verwenden, wobei ein Zugriffsversuch einer Software auf einen für die andere Software reservierten Teil des Schreib-Lese-Speichers eine Betriebsunterbrechung verursacht.

23. Funkkommunikationsmodul nach einem beliebigen der Ansprüche 1 bis 22, **dadurch gekennzeichnet, dass** der Steuerbefehlssatz ein Standard-AT-Befehlssatz ist.

24. Funkkommunikationsmodul nach Anspruch 23, **dadurch gekennzeichnet, dass** der Steuerbefehlssatz neben den Standard-AT-Befehlen einen zusätzlichen AT-Befehl umfasst, der Befehl zum Laden einer Clientsoftware genannt wird und es der externen Clientsoftware ermöglicht, in das Funkkommunikationsmodul eine neue Clientsoftware oder einen neuen Clientsoftwareteil zu laden.

25. Funkkommunikationsmodul nach einem beliebigen der Ansprüche 23 und 24, **dadurch gekennzeichnet, dass** der Steuerbefehlssatz neben den Standard-AT-Befehlen einen zusätzlichen AT-Befehl umfasst, der Deaktivierungsbefehl genannt wird und es der externen Clientsoftware ermöglicht, die eingebettete Clientsoftware oder einen Teil der eingebetteten Clientsoftware zu deaktivieren.

26. Verfahren zur Ausführung einer Clientsoftware zur Steuerung eines Funkkommunikationsmoduls, wobei es sich bei dem Funkkommunikationsmodul um einen Typ handelt, der eine Hauptsoftware hostet und ausführt, die insbesondere Funkkommunikationsfunktionen wahrnimmt, wobei diese Hauptsoftware Mittel zum Ausführen von Steuerbefehlen umfasst, die von der Steuer-Clientsoftware an die Hauptsoftware gesendet werden und einem vorgegebenen Steuerbefehlssatz angehören, **dadurch gekennzeichnet, dass** das Verfahren die folgenden, vom Funkkommunikationsmodul ausgeführten Schritte umfasst:
- Schritt zum Durchführen des Hostens von mindestens einer Clientsoftware, die eingebettete Clientsoftware genannt wird und eine Haupt-Clientanwendung und mindestens eine Neben-Clientanwendung, die Slave der Haupt-Clientanwendung ist, umfasst;
- Schritt zum Ausführen der mindestens einen Clientsoftware, wobei die von der eingebetteten Clientsoftware ausgeführten Verarbeitungen zwischen der Haupt-Clientanwendung und der mindestens einen Neben-Clientanwendung verteilt werden;
und **dadurch**, dass das Verfahren einen Schritt des Dialogs zwischen der eingebetteten Clientsoftware und der Hauptsoftware umfasst, so dass die eingebettete Clientsoftware mindestens eine der beiden folgenden Rollen spielt:
- die Rolle der Steuer-Clientsoftware, welche Steuerbefehle an die Hauptsoftware sendet und von der Hauptsoftware Antworten empfängt, die das Ergebnis der Ausführung bestimmter Steuerbefehle sind;
- die Rolle einer Überwachungsclientsoftware, welche die Ausführung von Steuerbefehlen verwaltet, die von der Steuer-Clientsoftware gesendet werden, wobei die Steuer-Clientsoftware, die externe Clientsoftware genannt wird und von einer Dritteinrichtung gehostet und ausgeführt wird, die mit dem Funkkommunikationsmodul zusammenwirkt.
